(19) Europäisches Patentamt / European Patent Office / Office européen des brevets

(11) **EP 4 337 914 B1**

(12) **FASCICULE DE BREVET EUROPEEN**

(45) Date de publication et mention
de la délivrance du brevet:
**01.01.2025   Bulletin 2025/01**

(21) Numéro de dépôt: **22782914.0**

(22) Date de dépôt: **05.09.2022**

(51) Classification Internationale des Brevets (IPC):
**G01C 11/02** *(2006.01)*    **G03B 15/00** *(2021.01)*
**H04B 10/118** *(2013.01)*   **G05D 1/00** *(2024.01)*
**B64G 1/24** *(2006.01)*     **B64G 1/10** *(2006.01)*

(52) Classification Coopérative des Brevets (CPC):
**G01C 11/025; B64G 1/1021; B64G 1/1028;
B64G 1/244; H04B 10/118**

(86) Numéro de dépôt international:
**PCT/FR2022/051668**

(87) Numéro de publication internationale:
**WO 2023/037066 (16.03.2023 Gazette 2023/11)**

(54) **PROCÉDÉ D'ACQUISITION D'IMAGES D'UNE ZONE TERRESTRE PAR UN ENGIN SPATIAL COMPORTANT UN MODULE D'ÉMISSION LASER**

VERFAHREN ZUR ERFASSUNG VON BILDERN EINER TERRESTRISCHEN ZONE UNTER VERWENDUNG EINES RAUMFAHRZEUGS MIT EINEM LASERÜBERTRAGUNGSMODUL

METHOD FOR ACQUIRING IMAGES OF A TERRESTRIAL ZONE USING A SPACECRAFT COMPRISING A LASER TRANSMISSION MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.09.2021   FR 2109390**

(43) Date de publication de la demande:
**20.03.2024   Bulletin 2024/12**

(73) Titulaire: **Airbus Defence and Space SAS
31402 Toulouse Cedex 4 (FR)**

(72) Inventeurs:
• **GHEZAL, Mehdi
31402 TOULOUSE CEDEX 4 (FR)**
• **GIRAUD, Emmanuel
31402 TOULOUSE (FR)**

(74) Mandataire: **Plasseraud IP
104 Rue de Richelieu
CS92104
75080 Paris Cedex 02 (FR)**

(56) Documents cités:
**WO-A1-2018/073507     US-A1- 2019 084 698**

• **LAVEZZI GIOVANNI ET AL: "Attitude Control Strategies for an Imaging CubeSat", 2019 IEEE INTERNATIONAL CONFERENCE ON ELECTRO INFORMATION TECHNOLOGY (EIT), IEEE, 20 May 2019 (2019-05-20), pages 149 - 155, XP033615614, DOI: 10.1109/EIT.2019.8833806**
• **FOUQUET MARC ET AL: "UOSAT-12 MINISATELLITE FOR HIGH PERFORMANCE EARTH OBSERVATION AT LOW COST{ INTRODUCTION DESIGN TRADE-OFF FOR EARTH OBSERVATION FROM SMALL SATELLITES", ACTA ASTRONAUTICA, 31 August 1997 (1997-08-31), pages 173 - 182, XP055920412, Retrieved from the Internet <URL:https://www.sciencedirect.com/science/article/pii/S0094576597001811/pdfft?md5=d24f6f74292a5e7a4e84cbb352ae6c0e&pid=1-s2.0-S0094576597001811-main.pdf> [retrieved on 20220512]**
• **FUJITA SHINYA ET AL: "Attitude Maneuvering Sequence Design of High-Precision Ground Target Tracking Control for Multispectral Earth Observations", 2019 IEEE/SICE INTERNATIONAL SYMPOSIUM ON SYSTEM INTEGRATION (SII), IEEE, 14 January 2019 (2019-01-14), pages 153 - 158, XP033543271, DOI: 10.1109/SII.2019.8700434**

EP 4 337 914 B1

- **CHEN XIAOJIANG ET AL: "Ground-target tracking control of Earth-pointing satellites", 14 August 2000 (2000-08-14), pages 1 - 11, XP009540888, ISBN: 978-1-62410-301-8, Retrieved from the Internet <URL:https://arc.aiaa.org/doi/10.2514/6.2000-45 47> [retrieved on 20000822], DOI: 10.2514/6.2000-4547**
- **KONDO YOSUKE ET AL: "Study of Ground Point Tracking of Earth Observation Satellites", TRANSACTIONS OF THE JAPAN SOCIETY FOR AERONAUTICAL AND SPACE SCIENCES, vol. 52, 1 January 2004 (2004-01-01), pages 23 - 29, XP093002214, Retrieved from the Internet <URL:https://www.jstage.jst.go.jp/article/jjsass/ 52/600/52_600_23/_pdf/-char/ja>**

**Description**

**Domaine technique**

La présente invention appartient au domaine de l'imagerie terrestre par des engins spatiaux, tels que des satellites d'observation, et concerne plus particulièrement un procédé d'acquisition d'images d'une zone terrestre par un engin spatial en orbite défilante, ainsi qu'un engin spatial pour la mise en oeuvre d'un tel procédé d'acquisition.

**Etat de la technique**

Les missions d'observation terrestre effectuées par un engin spatial consistent à acquérir des images de parties de la surface de la Terre, c'est-à-dire effectuer des prises de vues de celle-ci. De telles acquisitions sont par exemple réalisées en réponse à des requêtes clients, et servent de base à la production d'images composites finales.

De manière conventionnelle, un tel engin spatial suit une orbite défilante autour de la Terre afin de réaliser des acquisitions lors de son survol de la surface de la Terre. A cet effet, il comporte un instrument d'observation associé à une résolution spatiale prédéterminée ainsi qu'à une ligne de visée optique. De manière connue, une telle ligne de visée optique forme la partie sortante du chemin optique de l'instrument d'observation, et pointe en direction de la surface de la Terre lors des acquisitions d'images.

De plus, l'instrument d'observation est configuré de sorte à présenter un champ de vision dont la projection au sol au Nadir présente une longueur prédéterminée selon la direction de défilement de l'engin spatial. Les caractéristiques de ce champ de vision dépendent, de manière connue en soi, des éléments optiques et des détecteurs composant l'instrument d'observation, ainsi que de leurs arrangements et positions respectifs. On comprend ainsi que cette longueur conditionne, au moins en partie, la dimension des acquisitions réalisées par l'instrument d'observation suivant la direction de défilement.

Lorsqu'il s'agit d'observer une zone terrestre s'étendant sur une distance supérieure à ladite longueur prédéterminée associée à l'instrument d'observation, la méthode d'acquisition généralement mise en oeuvre est celle connue sous le nom de « balayage par bandes » (ou « pushbroom » dans la littérature anglo-saxonne).

Toutefois, le défilement de l'engin spatial a un impact sur la capacité de l'instrument d'observation à effectuer des acquisitions nettes et précises. La réalisation d'acquisitions exemptes de tout effet de filé (encore dit effet de « flou cinétique ») est problématique, et ce d'autant plus lorsque la résolution recherchée est élevée. Une solution pour limiter l'effet de filé consiste à diminuer le temps d'acquisition, c'est-à-dire réaliser des prises de vues rapides. Toutefois, pour fonctionner à fréquence élevée, l'instrument d'observation nécessite une électronique complexe, et donc onéreuse. En outre, un faible temps d'acquisition a un impact défavorable sur le rapport signal sur bruit (« SNR », acronyme de l'expression anglo-saxonne « signal to noise ratio ») des acquisitions. La mise en oeuvre de configurations de type TDI (acronyme de l'expression anglo-saxonne « Time Delay and Intégration ») permet de réduire ce défaut, au prix d'une complexité électronique plus importante.

En outre, du fait des besoins croissants en termes d'acquisition d'images, de nombreuses images doivent pouvoir être acquises et transférées au sol au cours d'une même période orbitale. Pour permettre de transférer rapidement au sol une grande quantité de données, une possibilité envisagée est d'équiper l'engin spatial d'un module d'émission laser pour transférer ces données via une liaison laser. Toutefois, l'utilisation d'un module d'émission laser pour transférer les données au sol augmente également la complexité de l'engin spatial et de son contrôle.

La demande de brevet WO 2018/073507 propose un instrument d'observation fonctionnant en mode « pushbroom », comportant un capteur ligne et un module d'émission laser tous deux situés à un plan focal d'une optique de l'instrument d'observation. De telles dispositions sont avantageuses puisqu'elles permettent de réduire la quantité d'équipements à embarquer dans l'engin spatial, puisque la même optique est utilisée à la fois par le capteur ligne et le module d'émission laser.

Toutefois, la solution proposée par la demande de brevet WO 2018/073507 reste complexe notamment d'un point de vue contrôle de l'engin spatial lors des acquisitions d'images et des transferts de données.

**Exposé de l'invention**

La présente invention a pour objectif de remédier à tout ou partie des inconvénients de l'art antérieur, notamment ceux exposés ci-avant, en proposant une solution qui permette d'acquérir des images d'une zone terrestre par un engin spatial en orbite défilante avec une excellente qualité d'image, tout en permettant de transférer au sol les images acquises via une liaison laser, tout en limitant la complexité globale de l'engin spatial.

En outre la présente invention vise à permettre, dans certains modes de réalisation au moins, d'acquérir des images avec une excellente qualité d'image tout en gardant une bonne capacité d'acquisition d'images.

A cet effet, et selon l'invention, il est proposé un procédé d'acquisition d'images par un engin spatial selon la revendication 1.

Ainsi, l'engin spatial comporte un instrument d'observation et un module d'émission laser dont le champ de vision et la ligne de visée laser sont tous deux fixes en repère engin spatial. L'instrument d'observation comporte un capteur matriciel, c'est-à-dire un capteur comportant une pluralité de lignes et une pluralité de cellules d'acquisition, situé au niveau d'un plan focal de l'optique de l'instrument d'observation. Le module d'émission laser est par exemple situé dans le plan focal de l'optique comme le capteur matriciel, ou dans un plan focal secondaire obtenu par duplication du plan focal de sorte que le plan focal et le plan focal secondaire se superposent optiquement. Le module d'émission laser peut aussi être situé dans un plan focal intermédiaire correspondant à une partie de l'optique de l'instrument d'observation. Par exemple si l'instrument d'observation a une optique de type Korsch, le plan focal intermédiaire peut correspondre au plan focal du Cassegrain associé.

Ainsi, la solution proposée est simple en termes d'équipements à embarquer et à contrôler dans l'engin spatial, étant donné qu'il n'est pas nécessaire d'équiper l'engin spatial :

- d'équipements visant à rendre les lignes de visée optique et laser mobiles en repère engin spatial, et
- d'une optique dédiée pour le module d'émission laser, puisque celui-ci utilise l'optique de l'instrument d'observation.

En outre, les éventuelles erreurs de pointage sont alors les mêmes pour le capteur matriciel et le module d'émission laser, de sorte qu'elles sont plus faciles à estimer et à corriger.

Pour déplacer le point visé par la ligne de visée optique de l'instrument d'observation ou le point visé par la ligne de visée laser du module d'émission laser, audelà du déplacement naturel lié au défilement de l'engin spatial sur son orbite défilante, il faut par conséquent contrôler l'attitude de l'engin spatial pour modifier le pointage de l'engin spatial.

Afin de limiter la complexité du contrôle de pointage, l'attitude de l'engin spatial est contrôlée, lors d'une phase d'acquisition ou d'une phase d'émission, en fonction d'un point de consigne prédéterminé à la surface de la Terre. A partir de ce point de consigne prédéterminé, le contrôle d'attitude comporte deux étapes successives qui sont exécutées indépendamment du type de phase d'acquisition ou d'émission considérée. Ces étapes comportent tout d'abord une étape au cours de laquelle l'attitude de l'engin spatial est modifiée pour orienter une ligne de visée (optique ou laser) vers le point de consigne, suivie d'une étape au cours de laquelle l'attitude de l'engin spatial est contrôlée afin de maintenir la ligne de visée (optique ou laser) orientée vers le point de consigne. Ainsi, le contrôle d'attitude permet d'immobiliser à la surface de la Terre le point visé par la ligne de visée considérée, optique ou laser. Un tel contrôle d'attitude permet donc de maintenir le module d'émission laser pointé vers une module de réception laser lors d'une phase d'émission de données, et d'acquérir une image sans effet de filé lors d'une phase d'acquisition, et avec un SNR qui peut être amélioré par rapport aux solutions de l'art antérieur.

Il est à noter que le contrôle de pointage réalisé au cours de ces deux étapes de modification de pointage et d'immobilisation de pointage est un contrôle d'attitude essentiellement deux axes, et le contrôle de l'attitude de l'engin spatial en rotation autour de la ligne de visée n'est pas considéré dans ces deux étapes. L'attitude de l'engin spatial est cependant bien contrôlée suivant trois axes. Notamment, au cours de chaque phase d'acquisition et simultanément à l'étape d'immobilisation de pointage, l'attitude de l'engin spatial est également contrôlée pour maintenir l'empreinte au sol du champ de vision de l'instrument d'observation immobile en rotation autour du point de consigne pendant la durée d'immobilisation.

L'instrument d'observation comportant un capteur matriciel, chaque image acquise représente malgré l'immobilisation de pointage l'équivalent d'une pluralité d'images lignes telles qu'acquises par un capteur ligne dans le cas d'un mode « pushbroom ». Il est donc possible de conserver une bonne capacité d'acquisition d'images, c'est-à-dire conserver la capacité d'imager une surface importante de la Terre, en augmentant le nombre de cellules d'acquisition du capteur matriciel suivant la direction de défilement. Par exemple, il est possible d'envisager un nombre de cellules d'acquisition supérieur à 1000, voire supérieur à 5000 suivant la direction de défilement.

Dans un mode « pushbroom », il est nécessaire d'envoyer à l'engin spatial des commandes précises des actionneurs de contrôle d'attitude, pour les manoeuvres d'attitude et les acquisitions successives d'images lignes. En particulier, chaque acquisition d'image en mode « pushbroom » TDI nécessite un pilotage précis de l'engin spatial pour avoir un bon recalage spatial des différents étages TDI. Il est ainsi nécessaire de définir un profil de guidage d'attitude détaillé pour les manoeuvres d'attitude, l'acquisition d'image et la transition entre les deux. La détermination de telles commandes est complexe et ne peut généralement pas être effectuée à bord de l'engin spatial faute de puissance calcul embarquée suffisante. Il est donc nécessaire de générer ces commandes en avance au sol et de les transmettre à l'engin spatial par une liaison haut débit, ce qui n'est possible que lorsque l'engin spatial est en visibilité d'une station sol disposant d'une liaison haut débit (en général une fois par orbite).

Du fait de l'acquisition d'image par un capteur matriciel et de l'immobilisation du pointage lors des phases d'acquisitions, la programmation de l'engin spatial peut se faire très simplement en envoyant les coordonnées des points de consigne associés respectivement aux parties de la surface de la Terre pour lesquelles des images doivent être acquises. Ces points de consigne peuvent être directement envoyés à bord, car la phase d'acquisition d'image ne nécessite qu'un guidage très simple pour essentiellement compenser le défilement de l'engin spatial. Ainsi, le profil de guidage de la manoeuvre d'attitude et de l'acquisition d'image peuvent être calculés simplement à bord à partir des coordonnées (par exemple latitude et longitude) du point de consigne de la phase d'acquisition ou d'émission précédente et à partir des coordonnées du point de consigne de la phase d'acquisition ou d'émission suivante. Eventuellement, des informations de temps (par exemple date et/ou la durée d'immobilisation) et/ou d'altitude du point de consigne peuvent également être transmises. De telles informations peuvent être envoyées par une liaison très bas débit de sorte qu'il suffit d'être en visibilité avec une station sol bas débit. De telles stations sol bas débit utilisent des moyens techniquement simples et peu coûteux, bien connus de l'homme du métier, et peuvent donc être prévues en plus grand nombre que les stations sol haut débit, de sorte qu'une liaison très bas débit pourra être disponible plusieurs fois par orbite.

Une phase d'émission peut en outre être traitée de la même façon qu'une phase d'acquisition, en envoyant à l'engin spatial les coordonnées (point de consigne) du module de réception laser à utiliser. La programmation des phases d'émission peut donc être réalisée en même temps que la programmation des phases d'acquisition et avec le même type d'informations. Etant donné que ces informations peuvent être transmises au satellite 10 sur une liaison très bas débit disponible plusieurs fois par orbite, la programmation peut être effectuée de manière beaucoup plus dynamique que dans l'art antérieur, peu de temps avant la phase d'émission concernée. Par exemple, une liaison laser étant fortement dépendante des conditions météorologiques (nuages), il est possible de choisir tardivement parmi plusieurs modules de réception laser possibles celui avec les conditions météorologiques les plus favorables.

Dans des modes particuliers de mise en oeuvre, le procédé d'acquisition peut comporter en outre, de manière optionnelle, l'une ou plusieurs des caractéristiques suivantes, prises isolément ou selon toutes les combinaisons techniquement possibles.

Selon l'invention, l'engin spatial ayant une vitesse de défilement au sol $V_{sol}$ et l'instrument d'observation étant associé à une résolution spatiale $R_s$ suivant la direction de défilement, la durée d'immobilisation est supérieure à $R_s/V_{sol}$ pour chaque phase d'acquisition.

De telles dispositions permettent d'améliorer le SNR de l'image. De préférence, la durée d'immobilisation lors de chaque phase d'acquisition est significativement supérieure à $R_s/V_{sol}$ (facteur 100 voire 1000). De préférence, la durée d'acquisition de l'image, comprise dans la durée d'immobilisation d'une phase d'acquisition, est également supérieure à $R_s/V_{sol}$ voire significativement supérieure à $R_s/V_{sol}$ (facteur 100 voire 1000).

Selon l'invention, l'empreinte au sol du champ de vision étant de longueur L suivant la direction de défilement, le procédé d'acquisition comporte au moins deux phases d'acquisition successives d'images de deux parties $P_1$ et $P_2$ d'une zone terrestre Z, et l'étape de modification de pointage de la phase d'acquisition de l'image de la partie $P_2$ est exécutée au cours d'un intervalle temporel de durée $\beta$ telle que la quantité $V_{sol} \cdot (\alpha + \beta) \cdot 1/L$ est inférieure à une valeur R, R étant égal à 3 (R = 3), $\alpha$ étant la durée d'immobilisation de la phase d'acquisition de la partie $P_1$. Par exemple, lesdites deux parties $P_1$ et $P_2$

sont contigües ou se recouvrent au plus partiellement suivant la direction de défilement. Lesdites parties $P_1$ et $P_2$ peuvent également être disjointes.

La longueur L correspond à la longueur de l'empreinte au sol suivant la direction de défilement de l'engin spatial. Pour une orbite circulaire donnée, la longueur de l'empreinte au sol varie avec l'incidence de la ligne de visée optique sur la surface de la Terre, et est minimale lorsque l'incidence est normale sur ladite surface de la Terre (pointage Nadir). La longueur L correspond à la longueur minimale de l'empreinte au sol, c'est-à-dire la longueur de l'empreinte au sol sous incidence normale (pointage Nadir). Toutefois, il est évidemment possible d'utiliser un pointage oblique lors des acquisitions et l'invention n'est pas limitée à l'utilisation d'un pointage Nadir. La longueur L sous incidence normale est considérée en tant que longueur de référence car, si l'inégalité $V_{sol} \cdot (\alpha + \beta) \cdot 1/L < R$ est vérifiée, l'inégalité $V_{sol} \cdot (\alpha + \beta) \cdot 1/L_{obl} < R$ est également vérifiée, $L_{obl}$ étant la longueur de l'empreinte au sol sous pointage oblique. Il est également à noter que l'invention n'est pas limitée à l'utilisation d'une orbite circulaire, et est applicable également à une orbite elliptique. Dans ce cas, la longueur L de référence (minimale) correspond à la longueur de l'empreinte au sol sous incidence normale lorsque l'engin spatial se trouve au périgée de l'orbite elliptique. En outre, la vitesse de défilement au sol $V_{sol}$ considérée en tant que vitesse de défilement au sol de référence (maximale) correspond à la vitesse de défilement au sol lorsque le satellite se trouve au périgée de l'orbite elliptique.

De préférence un pointage Nadir est utilisé puisqu'il donne la résolution maximale, mais rien n'empêche de faire un pointage oblique suivant la direction de défilement (en amont ou aval) et/ou transversalement à ladite direction de défilement (à gauche ou à droite). Des pointages obliques peuvent notamment être utilisés pour acquérir des images stéréo.

Grâce à de telles dispositions, le retard pris lors de l'acquisition de l'image de la partie $P_1$, par rapport au défilement de l'engin spatial et du fait de l'immobilisation de l'empreinte au sol, est limité et en partie rattrapé par une manoeuvre en tangage relativement rapide. Ainsi, au cours d'un même survol de la zone terrestre Z, il est possible de réaliser l'acquisition de plusieurs parties successives suivant la direction de défilement de l'engin spatial avec peu de retard et donc de réaliser l'acquisition de bandes de longueur élevée suivant ladite direction de défilement de l'engin spatial. Pour une orbite donnée et pour une durée d'immobilisation $\alpha$ prédéterminée, les principaux paramètres permettant d'assurer que la quantité $V_{sol} \cdot (\alpha + \beta) \cdot 1/L$ est inférieure à R sont les suivants :

- durée $\beta$ de la modification de pointage,
- longueur L de l'empreinte au sol.

La quantité $V_{sol} \cdot (\alpha + \beta) \cdot 1/L$ diminue lorsque la durée $\beta$ diminue. Pour réduire la durée $\beta$, il est possible d'augmenter le rapport $C_t/I_t$ entre la capacité $C_t$ de for-

mation de couple en tangage de l'engin spatial et l'inertie $I_t$ en tangage dudit engin spatial. En effet, il est possible de démontrer que la durée β vérifie l'expression suivante :

[Math. 1]

$$\beta \geq \sqrt{\frac{4 \cdot I_t \cdot \theta}{C_t}}$$

expression dans laquelle θ correspond à la variation d'attitude en tangage réalisée au cours de l'étape de modification de pointage.

La quantité $V_{sol}\cdot(\alpha + \beta)\cdot 1/L$ diminue lorsque la longueur L augmente. Pour augmenter la longueur L, il est par exemple possible d'augmenter le nombre $N_p$ de cellules d'acquisition (pixels) du capteur matriciel suivant la direction de défilement.

Pour assurer que la quantité $V_{sol}\cdot(\alpha + \beta)\cdot 1/L$ est inférieure à R, le rapport $C_t/I_t$ et la longueur L (par exemple le nombre $N_p$) seront supérieurs aux rapports $C_t/I_t$ et/ou aux longueurs L généralement considérés dans les solutions de l'art antérieur.

De préférence, toutes les phases d'acquisition d'images de parties de la zone terrestre Z qui sont exécutées successivement (non séparées par une phase d'émission) sont telles que la durée d'immobilisation α de l'étape d'immobilisation de pointage d'une phase d'acquisition donnée et la durée β de l'étape de modification de pointage (au moins pour une modification d'attitude en tangage) de la phase d'acquisition suivante vérifient $V_{sol}\cdot(\alpha + \beta)\cdot 1/L < R$. Toutefois, cela peut évidemment être adapté en fonction des besoins, et il n'est pas nécessaire de modifier rapidement le pointage de l'engin spatial s'il y a peu d'images à acquérir dans la zone terrestre Z.

Dans des modes particuliers de mise en oeuvre, le procédé d'acquisition comporte, au cours d'une même période orbitale, au moins deux phases d'acquisition d'images d'une même partie $P_1$ d'une zone terrestre. De telles dispositions permettent d'obtenir des images (multi)stéréo de ladite même partie $P_1$, qui sont acquises par le même engin spatial au cours du même survol de la zone terrestre considérée (même période orbitale) par ledit engin spatial. Par exemple, ces au moins deux phases d'acquisition d'images de la même partie $P_1$ de la zone terrestre sont exécutées successivement l'une après l'autre, ou sont séparées par une ou plusieurs phases d'acquisition d'images d'autres parties de la zone terrestre et/ou par une ou plusieurs phases d'émission. Dans le cas où une ou plusieurs phases d'acquisition d'images d'autres parties sont intercalées entre les au moins deux phases d'acquisition d'images de la même partie $P_1$, l'étape de modification de pointage de chaque phase d'acquisition est de préférence exécutée au cours d'un intervalle temporel de durée β telle que la quantité

$V_{sol}\cdot(\alpha + \beta)\cdot 1/L$ est inférieure à une valeur R, R étant égal à 3 (R = 3), ou égal à 2.3 (R = 2.3), α étant la durée d'immobilisation de la phase d'acquisition précédente.

Dans des modes particuliers de mise en oeuvre, la zone terrestre Z comporte au moins une bande de longueur supérieure à 10 km obtenue par l'acquisition d'images d'au moins 3 parties agencées dans le prolongement l'une de l'autre suivant la direction de défilement de l'engin spatial, les parties adjacentes dans la direction de défilement étant contigües ou se recouvrant au plus partiellement suivant la direction de défilement.

Dans des modes particuliers de mise en oeuvre, la durée d'immobilisation α est comprise entre 200 ms et 1s.

Dans des modes particuliers de mise en oeuvre, la durée β est comprise entre 1s et 2s.

Dans des modes particuliers de mise en oeuvre, chaque étape d'immobilisation de pointage comporte une tranquillisation du pointage de l'engin spatial préalable à l'acquisition d'une image ou à l'émission d'une ou plusieurs images acquises.

Dans des modes particuliers de mise en oeuvre, la durée de la tranquillisation, comprise dans la durée d'immobilisation, est comprise entre 100 ms et 800 ms.

Dans des modes particuliers de mise en oeuvre, le procédé d'acquisition comporte une phase d'acquisition par le capteur matriciel d'une image d'une zone de calibration, dite image de calibration, et une calibration d'erreur de pointage par comparaison de l'image de calibration avec des données de référence associées à ladite zone de calibration.

En effet, étant donné que le capteur d'images est ici un capteur matriciel, il peut être utilisé pour acquérir une image de calibration d'une zone de calibration prédéterminée pour laquelle on dispose de données de référence. Par exemple, la ligne de visée optique étant orientée vers un point de consigne de la zone de calibration lors de l'acquisition de l'image de calibration, les données de référence correspondent par exemple à une image de référence de la zone de calibration qui représente l'image qui devrait être obtenue en l'absence d'erreur de pointage sur la ligne de visée optique. En comparant l'image de calibration avec l'image de référence, il est possible d'estimer l'éventuelle erreur de pointage, qui peut ensuite être compensée lors des phases d'acquisition d'images à émettre et lors des phases d'émission desdites images acquises. L'image de calibration, utilisée pour estimer les erreurs de pointage, est donc acquise par le même capteur matriciel que celui utilisé pour acquérir les images qui sont ensuite émises sur la liaison laser par le module d'émission laser. D'autres données de référence peuvent être considérées, alternativement ou en complément. Par exemple, il peut s'agir de coordonnées théoriques dans l'image de calibration, en l'absence d'erreur de pointage, d'un élément caractéristique situé dans la zone de calibration et détectable dans l'image de calibration. En comparant les coordonnées réelles de l'élément caractéristique dans l'image de calibration avec ses coordonnées théoriques, il est possible d'estimer l'éventuelle erreur de pointage, etc.

Dans des modes particuliers de mise en oeuvre :

- le point de consigne d'une phase d'acquisition est tel que l'empreinte au sol du champ de vision de l'instrument d'observation coïncide avec une partie pour laquelle une image doit être acquise (éventuellement après rotation de l'empreinte autour de la ligne de visée optique),
- le point de consigne d'une phase d'émission correspond à la position d'un module de réception laser.

Selon l'invention, il est proposé un engin spatial destiné à être placé en orbite défilante autour de la Terre selon la revendication 7.

Dans des modes particuliers de réalisation, l'engin spatial peut comporter en outre, de manière optionnelle, l'une ou plusieurs des caractéristiques suivantes, prises isolément ou selon toutes les combinaisons techniquement possibles.

Dans des modes particuliers de réalisation, l'engin spatial étant d'inertie en tangage $I_t$ et les moyens de contrôle d'attitude ayant une capacité Ct de formation de couple en tangage, le rapport $C_t / I_t$ est supérieur à 0.01 s$^{-2}$. Par exemple, la capacité Ct est supérieure à 0.8 N·m.

Dans des modes particuliers de réalisation, l'engin spatial étant d'inertie en roulis $I_r$ et les moyens de contrôle d'attitude ayant une capacité $C_r$ de formation de couple en roulis, le rapport $C_r / I_r$ est supérieur à 0.01 s$^{-2}$. Par exemple, la capacité $C_r$ est supérieure à 0.8 N·m.

Dans des modes particuliers de réalisation, le capteur matriciel comporte un nombre $N_p$ supérieur à 1000 de cellules d'acquisition suivant la direction de défilement.

Dans des modes particuliers de réalisation, les moyens de contrôle d'attitude comportent au moins une roue à réaction récupératrice d'énergie électrique et/ou au moins un actionneur gyroscopique.

Dans des modes particuliers de réalisation, l'optique comporte au moins deux miroirs fixes en repère engin spatial, et le module d'émission laser émet un rayonnement laser suivant la ligne de visée laser via au moins deux miroirs de l'optique.

Dans des modes particuliers de réalisation, l'instrument d'observation comporte une optique de Korsch.

Grâce à de telles dispositions, et indépendamment de la façon dont les données acquises sont ultérieurement transmises au sol, le retard pris lors de l'acquisition de l'image de la partie $P_1$, par rapport au défilement de l'engin spatial et du fait de l'immobilisation de l'empreinte au sol, est limité et en partie rattrapé par une manoeuvre en tangage et/ou roulis relativement rapide. Ainsi, au cours d'un même survol de la zone terrestre Z, il est possible de réaliser plusieurs acquisitions dans la zone terrestre Z, sans effet de filé et avec un bon SNR (en ajustant la durée d'immobilisation $\alpha$).

Tout ce qui a été décrit précédemment sur les avantages liés à l'acquisition par un capteur matriciel et à la programmation via des points de consigne (notamment le fait que ces points de consignes peuvent être envoyés à bord juste avant la prise de vue via une liaison bas débit) s'applique également dans le cas du procédé d'acquisition selon le troisième aspect.

Dans des modes particuliers de mise en oeuvre, le procédé d'acquisition selon le troisième aspect peut comporter en outre, au cours de la même période orbitale, une autre phase d'acquisition d'une autre image de la partie $P_1$.

**Présentation des figures**

L'invention sera mieux comprise à la lecture de la description suivante, donnée à titre d'exemple nullement limitatif, et faite en se référant aux figures qui représentent :

- Figure 1 : une représentation schématique d'un engin spatial en orbite défilante autour de la Terre,
- Figure 2 : un diagramme illustrant les principales étapes d'un mode de mise en oeuvre d'un procédé d'acquisition,
- Figure 3 : un diagramme illustrant les principales étapes d'un mode de mise en oeuvre du procédé d'acquisition comportant l'acquisition de deux images successives,
- Figure 4 : une représentation schématique de l'engin spatial au cours de l'acquisition de deux images successives,
- Figure 5 : une représentation schématique d'exemples d'acquisitions successives de parties d'une zone terrestre,
- Figure 6 : une représentation schématique d'un satellite pour la mise en oeuvre d'un procédé d'acquisition,
- Figure 7 : une représentation d'une vue en coupe d'un premier exemple de réalisation d'un instrument d'observation et d'un module d'émission laser,
- Figure 8 : une représentation d'une vue en coupe d'un second exemple de réalisation de l'instrument d'observation et du module d'émission laser,
- Figure 9 : une représentation d'une vue en coupe d'un troisième exemple de réalisation de l'instrument d'observation et du module d'émission laser.

Dans ces figures, des références identiques d'une figure à une autre désignent des éléments identiques ou analogues. Pour des raisons de clarté, les éléments représentés ne sont pas à l'échelle, sauf mention contraire.

**Description des modes de réalisation**

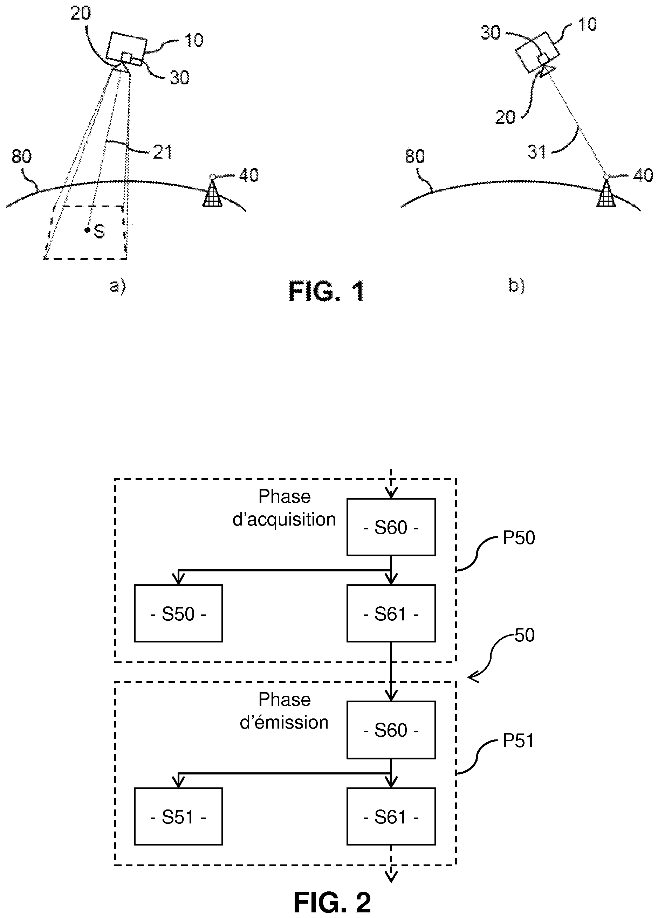

La figure 1 représente schématiquement un engin spatial en orbite défilante (c'est-à-dire une orbite non géostationnaire) autour de la Terre 80. De préférence, l'engin spatial est placé sur une orbite circulaire, d'altitude de préférence inférieure à 2000 km, voire inférieure à 1000 km. Rien n'exclut cependant, suivant d'autres exemples, de considérer d'autres types d'orbites, notamment des orbites elliptiques.

Dans l'exemple illustré par la figure 1, l'engin spatial est un satellite 10. Rien n'exclut cependant, suivant d'autres exemples non détaillés, de considérer d'autres types d'engins spatiaux (navette spatiale, sonde, etc.).

Ledit satellite 10 défile sur son orbite circulaire autour de la Terre 80 avec une vitesse de défilement au sol $V_{sol}$. Par exemple, le satellite 10 défile sur une orbite circulaire d'altitude sensiblement égale à 500 km avec une vitesse de défilement au sol sensiblement égale à 7 $km.s^{-1}$.

Le satellite 10 comporte un instrument d'observation 20 pour acquérir des images de parties de la surface de la Terre 80.

Par « acquisition » d'une partie de la surface de la Terre 80, on fait référence ici à la mesure, au cours d'un intervalle de temps de durée prédéterminée, d'un flux optique reçu de ladite partie de la surface de la Terre 80 par ledit instrument d'observation 20.

L'instrument d'observation 20 comporte, de manière connue en soi, des moyens d'acquisition configurés pour capter le flux optique provenant de la surface de la Terre 80. En particulier, l'instrument d'observation 20 comporte au moins un capteur matriciel 24 comportant une pluralité de cellules d'acquisition (pixels) organisées en plusieurs lignes et plusieurs colonnes. Dans la présente description, on considère de manière nullement limitative que chaque ligne s'étend transversalement à la direction de défilement, tandis que chaque colonne s'étend sensiblement suivant ladite direction de défilement. L'instrument d'observation 20 comporte également une optique comportant un ou plusieurs miroirs agencés pour réfléchir le flux optique provenant de la surface de la Terre 80 en direction dudit capteur matriciel 24, agencé au niveau d'un plan focal PF de l'optique dudit instrument d'observation 20.

L'instrument d'observation 20 est associé à une ligne de visée optique 21. Ladite ligne de visée optique 21 forme la partie sortante du chemin optique de l'instrument d'observation 20 et rencontre la surface de la Terre 80 en un point dit « point au sol » S. Par convention, la ligne de visée optique 21 est définie comme correspondant au chemin optique partant du centre du capteur matriciel 24. La ligne de visée optique 21 est fixe en repère satellite, c'est-à-dire que l'orientation de la ligne de visée optique 21 par rapport à un corps 11 du satellite ne peut pas être modifiée et suit nécessairement le mouvement du satellite 10 lorsque l'attitude dudit satellite 10 est modifiée.

L'instrument d'observation 20 est également associé à un champ de vision fixe en repère satellite. Ce champ de vision fixe correspond à l'ouverture angulaire de l'instrument d'observation 20 et des cellules d'acquisition du capteur matriciel. On note par ailleurs que par « fixe », on fait référence ici au fait que la ligne de visée optique 21 est fixe en repère satellite et qu'en outre l'ouverture angulaire est de taille invariable. Le champ de vision de l'instrument d'observation 20 forme une empreinte au sol de longueur L suivant la direction de défilement. Tel qu'indiqué précédemment, la longueur de l'empreinte au sol peut varier avec l'incidence de la ligne de visée optique 21 sur la surface de la Terre 80, et la longueur L correspond à la longueur minimale de l'empreinte au sol, qui est obtenue avec un pointage Nadir de la ligne de visée optique 21. Cette longueur L obtenue avec un pointage Nadir (et au périgée de l'orbite dans le cas d'une orbite elliptique) est considérée en tant que longueur de référence (minimale) pour l'empreinte au sol. Toutefois, les acquisitions d'images ne sont pas nécessairement effectuées avec un pointage Nadir et peuvent être effectuées avec un pointage quelconque.

De plus, l'instrument d'observation 20 est associé à une résolution spatiale $R_s$ prédéterminée. De manière conventionnelle, la résolution spatiale correspond à la taille, par exemple en mètres, du plus petit objet qui peut être détecté dans une scène représentée par une image acquise par l'instrument d'observation 20. Aussi, plus la taille du plus petit objet détectable diminue, plus la résolution spatiale augmente. Par exemple, si la résolution spatiale est égale à 0.5 mètres (m), alors le plus petit élément de surface de la Terre 80 qu'un pixel du capteur peut représenter est d'aire 0.25 $m^2$. Rien n'exclut de considérer d'autres valeurs de résolution spatiale. De préférence, la résolution spatiale $R_s$ est inférieure à deux mètres (2 m), voire inférieure au mètre (1 m). Comme pour la longueur L, la résolution spatiale peut varier avec l'incidence de la ligne de visée optique 21 sur la surface de la Terre 80. La résolution spatiale $R_s$ correspond ici la résolution spatiale de l'instrument d'observation 20 obtenue avec un pointage Nadir (et au périgée de l'orbite dans le cas d'une orbite elliptique). La résolution spatiale $R_s$ est inférieure à la longueur L et est préférentiellement significativement inférieure à ladite longueur L, par exemple d'un facteur au moins 5000, voire au moins 10000.

Le satellite 10 comporte également un module d'émission laser 30 pour émettre des données sous la forme d'un rayonnement laser. Les données à émettre sous la forme d'un rayonnement laser comportent notamment des images de la surface de la Terre 80 acquises par l'instrument d'observation 20. Ces données sont émises à destination d'un module de réception laser 40, qui se trouve dans une station sol à la surface de la Terre 80 dans l'exemple non limitatif de la figure 1. Evidemment, plusieurs modules de réception laser 40 peuvent être prévus, par exemple distribués à la surface de la Terre 80 pour augmenter les opportunités de transférer des données vers le sol. La liaison entre le module d'émission laser 30 et un module de réception laser 40 est généralement désignée par « liaison laser ».

Le module d'émission laser 30 comporte, de manière connue en soi, une source de rayonnement laser et des moyens adaptés à moduler le rayonnement laser en fonction des données à émettre.

Le module d'émission laser 30 est associé à une ligne de visée laser 31 fixe en repère satellite, comme la ligne de visée optique 21. En outre, les lignes de visée optique 21 et laser 31 sont liées en ce que le module d'émission laser 30 est intégré dans l'instrument d'observation 20, de sorte que ledit module d'émission laser 30 utilise tout ou partie d'une optique dudit instrument d'observation 20. Par exemple, le module d'émission laser 30 est situé au plan focal PF de l'instrument d'observation 20, comme le capteur matriciel 24. D'autres exemples non limitatifs sont également décrits ci-après. Il est à noter que les lignes de visée optique 21 et 31 peuvent être différentes l'une de l'autre, ou bien confondues l'une avec l'autre, suivant les exemples.

La figure 2 représente schématiquement les principales étapes d'un procédé 50 d'acquisition d'images de la surface de la Terre 80.

Tel qu'illustré par la figure 2, le procédé 50 d'acquisition comporte principalement deux phases distinctes :

-   une phase d'acquisition P50 comportant une étape S50 d'acquisition d'une image d'une partie de la surface de la Terre 80, au moyen du capteur matriciel 24 de l'instrument d'observation 20 (partie a) de la figure 1),
-   une phase d'émission P51 comportant une étape S51 d'émission de données au moyen du module d'émission laser 30, à destination d'un module de réception laser 40 (partie b) de la figure 1), les données émises comportant au moins une image acquise par le capteur matriciel 24 de l'instrument d'observation 20.

Le procédé 50 d'acquisition comporte au moins deux phases d'acquisition P50 et au moins une phase d'émission P51. Plusieurs phases d'acquisition P50 sont exécutées pour acquérir plusieurs images respectives, et tout ou partie des images acquises au cours de ces phases d'acquisition sont émises au cours d'une phase d'émission P51. A mesure que le satellite 10 se déplace sur son orbite défilante, le procédé 50 d'acquisition comporte donc une alternance d'une ou plusieurs phases d'acquisition P50 et d'une ou plusieurs phases d'émission P51.

La ligne de visée optique 21 et la ligne de visée laser 31 du module d'émission laser 30 étant fixes en repère satellite, le pointage de la ligne de visée optique 21 du capteur matriciel 24 vers une partie à imager de la surface de la Terre 80 (phase d'acquisition P50) ou le pointage de la ligne de visée laser 31 du module d'émission laser 30 vers un module de réception laser 40 (phase d'émission P51) se fait en contrôlant l'attitude du satellite 10.

Au cours des phases d'acquisition P50 et d'émission P51, l'attitude du satellite 10 est contrôlée en fonction d'un point de consigne à la surface de la Terre 80 prédéterminé pour la phase d'acquisition ou d'émission en cours. A partir de ce point de consigne, le contrôle d'attitude comporte, qu'il s'agisse d'une phase d'acquisition P50 ou d'une phase d'émission P51 :

-   une étape S60 de modification de pointage au cours de laquelle l'attitude du satellite 10 est modifiée de sorte à orienter la ligne de visée optique 21 ou la ligne de visée laser 31 vers le point de consigne, et
-   une étape S61 d'immobilisation de pointage pendant un intervalle temporel de durée dite d'immobilisation, au cours de laquelle l'attitude du satellite 10 est contrôlée de sorte que la ligne de visée optique 21 ou la ligne de visée laser 31 est maintenue orientée vers ledit point de consigne pendant la durée d'immobilisation.

Ainsi, d'un point de vue contrôle de pointage, le comportement du satellite 10 est le même qu'il s'agisse d'une phase d'acquisition P50 ou d'une phase d'émission P51. Le contrôle du pointage, qui est un contrôle d'attitude essentiellement deux axes, consiste en une succession d'étapes S60 de modification de pointage et S61 d'immobilisation de pointage, qui sont exécutées indépendamment du type (acquisition ou émission) de la phase en cours. Par exemple, le contrôle de pointage reçoit en entrée (i) les coordonnées du point de consigne et (ii) une durée d'immobilisation du pointage vers le point de consigne. Puis le contrôle d'attitude fait basculer le satellite 10 pour faire pointer la ligne de visée optique 21 ou laser 31 vers le point de consigne (étape S60) et maintient immobile le pointage pendant la durée d'immobilisation (étape S61).

Par « maintenir immobile », on entend que la consigne d'attitude du satellite est déterminée pour maintenir le point visé par la ligne de visée optique 21 ou la ligne de visée laser 31 sensiblement immobile sur le point de consigne, lui-même immobile à la surface de la Terre 80, malgré le défilement du satellite 10. Par « sensiblement immobile», on entend que l'objectif du contrôle d'attitude est de maintenir le point visé par la ligne de visée optique 21 ou la ligne de visée laser 31 immobile, mais que celui-ci peut varier légèrement pendant la durée d'immobilisation, du fait par exemple d'erreurs de contrôle d'attitude et/ou de bruits de mesure. Du fait d'un tel contrôle de pointage, on comprend que l'incidence de la ligne de visée optique 21 et de la ligne de visée laser 31 sur la surface de la Terre 80 varie pendant la durée d'immobilisation. Par exemple, si l'incidence de la ligne de visée optique 21 ou laser 31 est sensiblement normale à la surface de la Terre 80 au début de l'intervalle temporel d'immobilisation de pointage, alors l'incidence de ladite ligne de visée optique 21 ou laser 31 sur ladite surface de la Terre 80 sera légèrement oblique à la fin de l'intervalle temporel, pour compenser le défilement du satellite 10. Ainsi, la consigne d'attitude donnée varie au cours de cet intervalle temporel (pendant la durée d'immobilisation) et vise notamment à stopper le défilement des lignes de visée optique 21 et laser 31 au sol.

Le point de consigne d'une phase d'acquisition P50 est tel que l'empreinte au sol du champ de vision de l'instrument d'observation 20 coïncide avec une partie pour laquelle une image doit être acquise. Le point de consigne d'une phase d'émission P51 correspond à la position d'un module de réception laser 40. La consigne d'attitude est donc déterminée en fonction de la position du satellite 10 sur son orbite, de la position du point de consigne et de la direction de la ligne de visée optique 21 ou laser 31 en repère satellite.

Tel qu'indiqué précédemment, le contrôle de pointage est un contrôle d'attitude essentiellement deux axes visant à orienter la ligne de visée optique 21 ou laser 31 vers un point de consigne. L'attitude du satellite 10 est cependant contrôlée suivant trois axes. Notamment, au cours de chaque phase d'acquisition P50 et simultanément à l'étape S61 d'immobilisation de pointage, l'attitude du satellite 10 est également contrôlée pour maintenir l'empreinte au sol du champ de vision de l'instrument d'observation 20 immobile en rotation autour du point de consigne pendant la durée d'immobilisation.

La durée d'immobilisation d'une phase d'acquisition P50 doit permettre d'acquérir une image de la partie considérée, avec un niveau de qualité souhaité. Il est à noter que l'étape S50 d'acquisition d'image est exécutée au cours de l'intervalle temporel d'immobilisation de pointage (étape S61), et que l'étape S50 d'acquisition d'image est de durée inférieure ou égale à la durée d'immobilisation. La durée d'immobilisation d'une phase d'émission P51 doit permettre de transférer vers le module de réception laser 40 une quantité prédéterminée de données. Il est à noter que l'étape S51 d'émission de données est exécutée au cours de l'intervalle temporel d'immobilisation de pointage (étape S61), et que l'étape S51 d'émission de données est de durée inférieure ou égale à la durée d'immobilisation.

La durée d'immobilisation est supérieure à $R_s/V_{sol}$ pour chaque phase d'acquisition P50.

De telles dispositions sont particulièrement avantageuses. En effet, le fait que le point visé par la ligne de visée optique 21 reste immobile pendant la durée d'immobilisation permet d'éviter tout effet de filé. Par ailleurs, si la durée d'acquisition $\alpha_a$ (durée de l'étape S50 d'acquisition) est également supérieure à $R_s/V_{sol}$, alors cela permet de réaliser une acquisition présentant un bon rapport signal sur bruit. Par exemple, le rapport $R_s/V_{sol}$ est sensiblement égal à 70 microsecondes ($\mu$s). Préférentiellement, la durée d'immobilisation $\alpha$ d'une phase d'acquisition P50 est comprise entre 200 millisecondes (ms) et 1 seconde (s). La durée d'acquisition $\alpha_a$ est égale ou inférieure à la durée d'immobilisation $\alpha$, par exemple inférieure à 200 ms.

Dans la suite de la description, on considère que la zone terrestre Z à acquérir est de taille T suivant la direction de défilement. On considère ici que la zone terrestre Z correspond à une surface continue, c'est-à-dire d'un seul tenant suivant la direction défilement. Autrement dit, la suite de la description ne concerne pas le cas où la zone terrestre Z est une réunion de sous-zones terrestres disjointes suivant la direction de défilement. Toutefois, il convient de noter que rien n'empêche d'envisager l'acquisition d'une zone terrestre répondant à ces dernières caractéristiques, par exemple par application répétée d'une phase d'acquisition P50 à chacune des sous-zones disjointes composant alors ladite zone terrestre.

On considère également que, suivant la direction de défilement, la longueur L de l'empreinte au sol est inférieure à ladite taille T. De telles dispositions impliquent que plusieurs phases d'acquisition (au moins deux) sont nécessaires pour que la zone terrestre Z soit entièrement acquise, puisque l'empreinte au sol ne permet pas d'acquérir une image représentant toute la zone terrestre Z. La zone terrestre Z est nécessairement la réunion d'au moins deux parties différentes, représentées par au moins deux images. Les images acquises des différentes parties sont combinées pour former une image composite finale représentant l'ensemble de la zone terrestre Z à imager.

Dans la suite de la description, on désigne par $P_i$, i étant un nombre entier positif, une partie de la zone terrestre Z à acquérir par le capteur matriciel 24 de l'instrument d'observation 20. On adopte également la convention selon laquelle, si j est strictement supérieur à i, alors la partie $P_j$ est acquise par l'instrument d'observation 20 après la partie $P_i$.

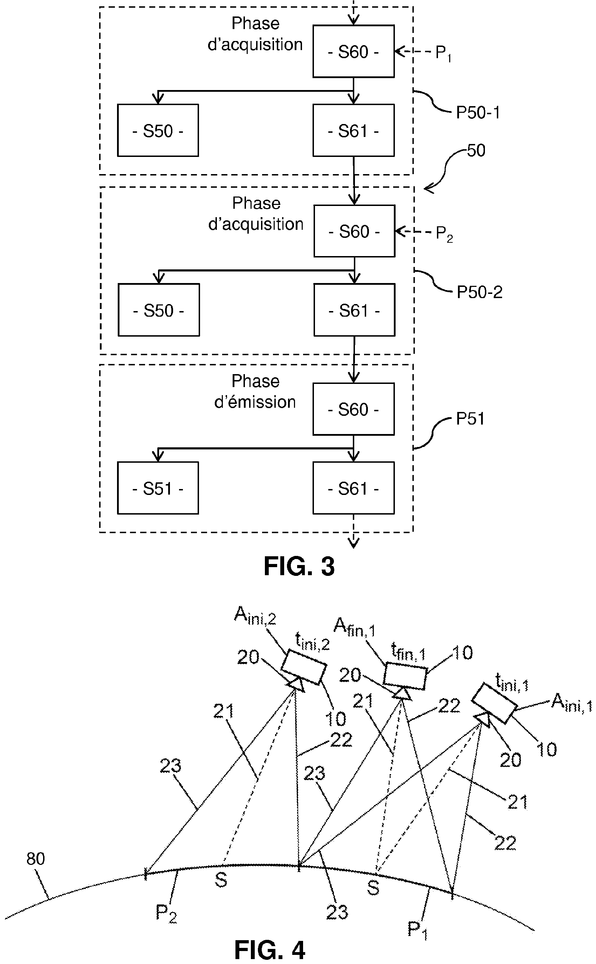

La figure 3 représente schématiquement les principales étapes d'un procédé 50 d'acquisition, dans le cas d'une acquisition successive d'images de deux parties $P_1$ et $P_2$ de la zone terrestre Z, la partie $P_2$ étant située géographiquement en aval de la partie $P_1$ suivant la direction de défilement.

Lesdites deux parties $P_1$ et $P_2$ sont par exemple contiguës, c'est-à-dire qu'elles se touchent sans se recouvrir mutuellement, ou bien lesdites parties $P_1$ et $P_2$ se recouvrent au plus partiellement suivant la direction de défilement. Lorsque les parties $P_1$ et $P_2$ se recouvrent partiellement, la surface de recouvrement représente de préférence moins de 10% de la surface de l'empreinte au sol pour l'acquisition de la partie $P_1$, voire moins de 5% de ladite surface de l'empreinte au sol pour l'acquisition de ladite partie $P_1$. De préférence, les parties $P_1$ et $P_2$ se trouvent dans le prolongement l'une de l'autre, c'est-à-dire qu'elles ne sont pas décalées l'une par rapport à l'autre transversalement à la direction de défilement. Dans d'autres exemples, les parties $P_1$ et $P_2$ peuvent être disjointes.

Tel qu'illustré par la figure 3, le procédé 50 d'acquisition comporte deux phases d'acquisition P50-1 et P50-2 successives, pour l'acquisition d'images respectives de la partie $P_1$ et de la partie $P_2$ de la zone terrestre Z par le capteur matriciel 24. Le procédé 50 d'acquisition comporte ensuite une phase d'émission P51 pour émettre tout ou partie des images des parties $P_1$ et $P_2$ sur une liaison laser vers un module de réception laser 40.

Dans la suite de la description, on considère de manière non limitative que les durées d'immobilisation $\alpha$ des phases d'acquisition P50-1 et P50-2 sont identiques. Rien n'exclut cependant, suivant d'autres exemples, de considérer des phases d'acquisition de durées d'immobilisation $\alpha$ différentes. La durée d'immobilisation $\alpha$ est supérieure à $R_s/V_{sol}$ (préférentiellement significativement supérieure à celle-ci, d'un facteur au moins 100, voire au moins 1000).

Durant la phase d'acquisition P50-1, l'étape S60 de modification de pointage vise à faire pointer la ligne de visée optique 21 vers un premier point de consigne permettant de faire coïncider l'empreinte au sol de l'instrument d'observation 20 avec la partie $P_1$ et l'étape S61 d'immobilisation de pointage vise à maintenir la ligne de visée optique 21 orientée vers ce premier point de consigne pendant la durée d'immobilisation $\alpha$.

Durant la phase d'acquisition P50-2, l'étape S60 de modification de pointage vise à faire pointer la ligne de visée optique 21 vers un second point de consigne permettant de faire coïncider l'empreinte au sol de l'instrument d'observation 20 avec la partie $P_2$ et l'étape S61 d'immobilisation de pointage vise à maintenir la ligne de visée optique orientée 21 orientée vers ce second point de consigne pendant la durée d'immobilisation $\alpha$.

Il est à noter que, dans cet exemple, l'étape S60 de modification de pointage de la phase d'acquisition P50-2 consiste principalement en une modification en tangage de l'attitude du satellite 10 (par exemple autour d'un axe de tangage perpendiculaire à un plan d'orbite du satellite 10). Rien n'exclut cependant suivant d'autres exemples d'avoir, au cours de l'étape S60 de modification de pointage de la phase d'acquisition P50-2, une modification en tangage et/ou en roulis de l'attitude du satellite 10, notamment dans le cas où les parties $P_1$ et $P_2$ sont disjointes.

Avantageusement, l'étape S60 de modification de pointage de la phase d'acquisition P50-2 est exécutée au cours d'un intervalle temporel de durée $\beta$ telle que la quantité $V_{sol} \cdot (\alpha + \beta) \cdot 1/L$ est inférieure à une valeur R, R étant égal à 3 (R = 3), ou égal à 2.3 (R = 2.3).

La figure 4 représente schématiquement le satellite 10 en train d'acquérir les parties $P_1$ et $P_2$ de la zone terrestre Z, et correspond à une vue simplifiée en deux dimensions résultant de l'intersection entre la Terre 80 et un plan de l'orbite dudit satellite 10.

L'exemple de la figure 4 est donné à titre nullement limitatif, afin d'illustrer le fonctionnement des phases d'acquisition P50-1 et P50-2 du procédé 50 d'acquisition de la figure 3.

Le champ de vision de l'instrument d'observation 20 est représenté dans la figure 1 par un cône délimité par deux côtés 22, 23 issus dudit satellite 10. Ces deux côtés 22, 23 délimitent à chaque instant une empreinte au sol sur la surface de la Terre 80, dont la longueur au sol est sensiblement égale à L. La ligne de visée optique 21 est quant à elle représentée dans la figure 4 au moyen d'une ligne en trait discontinu issue du satellite 10 et intersectant la surface de la Terre 80 en un point au sol S.

Tel qu'indiqué ci-dessus, au cours de l'étape S61 d'immobilisation de pointage de la phase d'acquisition P50-1, l'attitude du satellite 10 est contrôlée de sorte que le point au sol S visé par la ligne de visée optique 21 est maintenu immobile à la surface de la Terre 80 pendant toute la durée d'immobilisation $\alpha$, qui est supérieure à $R_s/V_{sol}$. Il convient de noter que, dans la mesure où le satellite 10 suit une orbite défilante et où la ligne de visée optique 21 est fixe en repère satellite, l'empreinte au sol, sauf contrôle d'attitude spécifique, devrait en principe défiler avec le satellite 10. Le contrôle d'attitude effectué au cours de l'étape S61 d'immobilisation de pointage de la phase d'acquisition P50-1 vise à empêcher le défilement de l'empreinte au sol.

L'exemple de la figure 4 permet d'illustrer le fonctionnement du contrôle d'attitude effectué au cours de l'étape S61 d'immobilisation de pointage de la phase d'acquisition P50-1. Dans l'exemple illustré par la figure 4, le satellite 10 est représenté trois fois sur son orbite :

- une première fois dans une attitude $A_{ini,1}$, au début de l'étape S61 d'immobilisation de pointage de la phase d'acquisition P50-1, c'est-à-dire au début de l'intervalle temporel de durée d'immobilisation $\alpha$, à un instant $t_{ini,1}$,

- une seconde fois dans une attitude $A_{fin,1}$, à la fin de l'étape S61 d'immobilisation de pointage de la phase d'acquisition P50-1, c'est-à-dire à la fin de l'intervalle temporel de durée d'immobilisation $\alpha$, à un instant $t_{fin,1}$ ($t_{fin,1} = t_{ini,1} + \alpha$),

- une troisième fois dans une attitude notée $A_{ini,2}$, à la fin de l'étape S60 de modification de pointage de la phase d'acquisition P50-2, à un instant $t_{ini,2}$ ($t_{ini,2} = t_{fin,1} + \beta$).

Dans l'attitude $A_{ini,1}$, la ligne de visée optique 21 est orientée pour que l'empreinte au sol corresponde à la partie $P_1$. Tel qu'illustré par la figure 4, l'attitude $A_{fin,1}$ est différente en tangage de l'attitude $A_{ini,1}$. On note cependant que, bien que les directions respectives de la ligne de visée optique 21 diffèrent selon que l'attitude du satellite 10 correspond à $A_{ini,1}$ ou bien à $A_{fin,1}$, le point au sol S ne s'est quant à lui pas déplacé au cours de l'intervalle temporel de durée d'immobilisation $\alpha$ (entre l'instant $t_{ini,1}$ et l'instant $t_{fin,1}$), du fait du contrôle d'attitude qui maintient immobile le point au sol S visé pendant la durée de l'étape S61 d'immobilisation de pointage.

Si l'attitude du satellite 10 n'était pas modifiée à l'issue de l'étape S61 d'immobilisation de pointage de la phase d'acquisition P50-1, la direction de la ligne de visée optique 21 resterait sensiblement parallèle à la direction présentée en fin d'acquisition de ladite partie $P_1$. Or, conserver cette dernière direction de la ligne de visée optique 21 retarderait l'acquisition de la partie $P_2$, car il faudrait alors attendre que le satellite 10 se déplace suffisamment sur son orbite pour que l'empreinte au sol corresponde à ladite partie $P_2$.

L'étape S60 de modification de pointage de la phase d'acquisition P50-2 vise précisément à orienter, immédiatement après avoir terminé la phase d'acquisition P50-1, la ligne de visée optique 21 de sorte que l'empreinte au sol corresponde à ladite partie $P_2$. En outre, l'étape S60 de modification de pointage est exécutée au cours d'un intervalle temporel de durée $\beta$, consécutif à l'intervalle temporel de durée d'immobilisation $\alpha$ de la phase d'acquisition P50-1, de sorte que la quantité $V_{sol} \cdot (\alpha + \beta) \cdot 1/L$ est inférieure à R.

L'objectif visé dans l'étape S60 de modification de pointage de la phase d'acquisition P50-2 est donc de placer le plus rapidement possible l'empreinte au sol sur la partie $P_2$, afin de pouvoir commencer au plus tôt l'acquisition de ladite partie $P_2$. Cette modification de pointage doit de préférence être effectuée suffisamment rapidement pour compenser en partie le temps passé à observer la partie $P_1$, et donc ne pas compromettre la réalisation de la mission d'observation. Par « compromettre la réalisation de la mission d'observation », on fait référence ici au fait de ne pas être en mesure de réaliser autant d'acquisitions que souhaité, et donc in fine de ne pas pouvoir imager la zone terrestre Z dans sa globalité.

Pour la suite de la description, on introduit la notion de retard relatif comme étant le rapport entre la distance, ramenée au sol, parcourue par le satellite 10 entre le début de l'immobilisation de pointage sur la partie $P_1$ et le début de l'immobilisation de pointage sur la partie $P_2$, et la longueur L. On note que ledit retard relatif correspond précisément à la quantité $V_{sol} \cdot (\alpha + \beta) \cdot 1/L$. Par conséquent, la notion de retard relatif vise à quantifier un retard du satellite 10 sur son orbite en prenant en compte non seulement la durée d'immobilisation $\alpha$ mais également la durée $\beta$ nécessaire aux manoeuvres de modification du pointage. De manière équivalente, la notion de retard relatif permet de quantifier la part utile de la mission consacrée à l'observation de la partie $P_1$ au regard de la part non utile de la mission consacrée, avant le début de l'observation de la partie $P_2$, aux manoeuvres nécessaires pour modifier l'attitude du satellite 10 en vue de l'acquisition prochaine de ladite partie $P_2$.

On comprend alors qu'une valeur de retard relatif strictement supérieure à 1 indique que le satellite 10 prend du retard sur l'ensemble de la durée nécessaire à l'exécution de l'étape S61 d'immobilisation de pointage de la phase d'acquisition P50-1 et de l'étape S60 de modification de pointage de la phase d'acquisition P50-2. Un tel retard est par exemple lié au fait qu'une fois l'étape S61 d'immobilisation de pointage de la phase d'acquisition P50-1 exécutée pendant une durée d'immobilisation $\alpha$ suffisamment longue, la durée $\beta$ de l'étape S60 de modification de pointage de la phase d'acquisition P50-2 n'est quant à elle pas suffisamment courte pour compenser le temps consacré à l'acquisition de l'image de la partie $P_1$. Dans le cas présent, le retard relatif est inférieur à R. Bien que cette valeur soit supérieure à 1, elle est suffisamment faible pour ne pas compromettre la mission d'observation, puisqu'il est néanmoins possible d'acquérir plusieurs parties successives suivant la direction de défilement. Dans le cas où l'on souhaite acquérir une zone terrestre Z comportant au moins une bande de longueur très importante, typiquement de l'ordre de plusieurs centaines de kilomètres, la quantité $V_{sol} \cdot (\alpha + P) \cdot 1/L$ est par exemple inférieure à 2.3.

De manière plus générale, la zone terrestre Z peut être constituée par un nombre N de parties $P_i$ à acquérir successivement, N étant égal ou supérieur à deux. Ainsi, le procédé 50 d'acquisition comporte N phases d'acquisition P50-i successives qui peuvent être telles que toute paire de phases d'acquisition P50-i et P50-(i+1) successives est conforme à la paire de phases d'acquisition P50-1 et P50-2 décrites ci-dessus. Le cas échéant, l'étape S60 de modification de pointage d'une phase d'acquisition P50-(i+1) ne correspond pas nécessairement à une modification d'attitude en tangage, mais peut correspondre à une modification d'attitude en roulis (par exemple autour d'un axe de roulis colinéaire à un vecteur vitesse du satellite 10 en repère inertiel) ou à une modification d'attitude à la fois en roulis et en tangage, suivant la position de la partie $P_{i+1}$ par rapport à la partie $P_i$. La durée d'immobilisation $\alpha$ et/ou la durée $\beta$ peuvent cependant varier d'une phase d'acquisition à une autre.

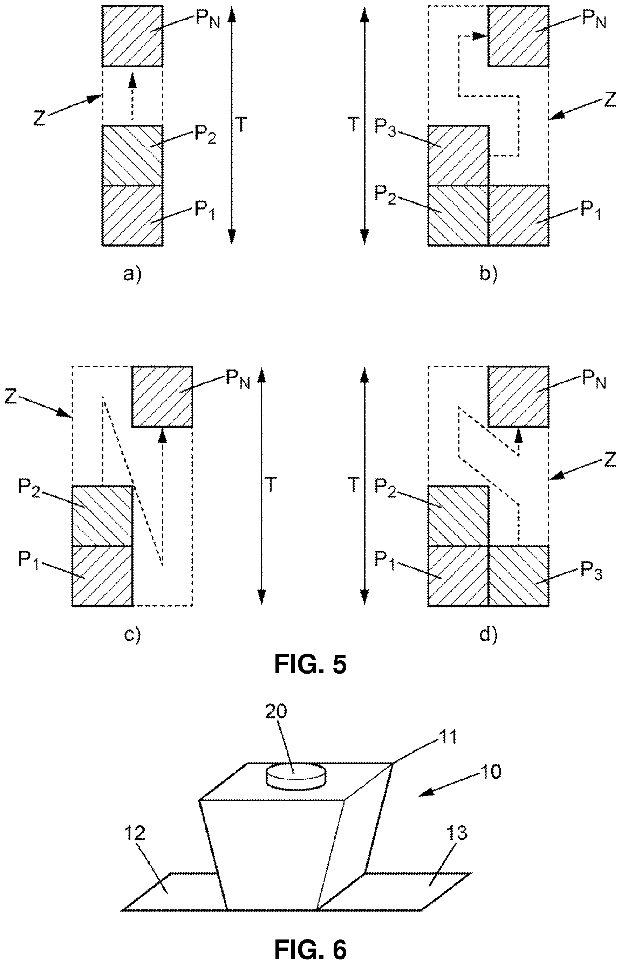

La figure 5 représente schématiquement des exemples de répartitions géographiques possibles de parties $P_1$ à $P_N$ à acquérir à l'intérieur d'une zone terrestre Z.

La partie a) de la figure 5 représente schématiquement un exemple dans lequel les parties $P_i$ sont agencées de sorte que, quelle que soit la valeur de i, la partie $P_{i+1}$ est toujours située en aval de la partie $P_i$ suivant la direction de défilement. Dans cet exemple nullement limitatif, la partie $P_{i+1}$ est contigüe de la partie $P_i$ quelle que soit la valeur de i, et est en outre agencée dans le prolongement de ladite partie $P_i$. Tel qu'indiqué précédemment, il est également possible de prévoir un recouvrement partiel entre des parties $P_{i+1}$ et $P_i$ par exemple un recouvrement inférieur à 10% voire inférieur à 5%. Un tel recouvrement permet notamment de faciliter le recalage des différentes images entre elles. Par « recalage », on fait référence ici au fait d'aligner en cohérence lesdites parties $P_i$ et $P_{i+1}$ lors de la reconstruction de l'image composite de la zone terrestre Z. Les techniques de traitement d'image employées pour la mise en oeuvre d'un tel recalage de deux images sont connues de l'homme de l'art.

La partie b) de la figure 5 représente schématiquement un exemple dans lequel la partie $P_{i+1}$ n'est pas

nécessairement située géographiquement en aval de la partie $P_i$ suivant la direction de défilement. Dans cet exemple nullement limitatif, la partie $P_2$ est contigüe de la partie $P_1$ transversalement à la direction de défilement, et est en outre agencée dans le prolongement de ladite partie $P_1$. La partie $P_3$ est contigüe de la partie $P_2$ suivant la direction de défilement, et est en outre agencée dans le prolongement de ladite partie $P_2$. La partie $P_4$ est contigüe de la partie $P_3$ transversalement à la direction de défilement, et est en outre agencée dans le prolongement de ladite partie $P_3$. La partie $P_4$ est également contigüe de la partie $P_1$ suivant la direction de défilement, et est en outre agencée dans le prolongement de ladite partie $P_1$. Tel qu'indiqué précédemment, il est également possible de prévoir un recouvrement partiel entre des parties $P_{i+1}$ et $P_i$.

Les parties c) et d) de la figure 5 représentent schématiquement d'autres exemples de répartitions géographiques possibles des parties $P_1$ à $P_N$ à acquérir l'intérieur de la zone terrestre Z, dans lesquels la partie $P_{i+1}$ n'est pas nécessairement située géographiquement en aval de la partie $P_i$ suivant la direction de défilement.

Dans des modes préférés de mise en oeuvre, chaque étape S61 d'immobilisation de pointage comporte une tranquillisation de pointage du satellite 10 préalable à l'acquisition d'une image ou à l'émission d'une ou plusieurs images acquises.

En effet, la modification de pointage du satellite 10, exécutée de préférence de manière très rapide, est susceptible de créer des vibrations résiduelles dudit satellite 10, et par conséquent également de la ligne de visée optique 21 ou de ligne de visée laser 31. En outre, les mesures ou estimations de l'attitude du satellite 10, immédiatement après une étape S60 de modification de pointage, peuvent être très bruitées. Par conséquent, dans un tel cas, il n'est pas possible de démarrer l'acquisition d'image ou l'émission de données au tout début de l'étape S61 d'immobilisation de pointage, et il convient au préalable de tranquilliser le pointage dudit satellite 10. La durée de la tranquillisation, comprise dans la durée d'immobilisation et avant la durée d'acquisition $\alpha_a$ (phase d'acquisition P50) ou la durée d'émission (phase d'émission P51), est par exemple comprise entre 100 ms et 800 ms.

La figure 6 représente schématiquement un exemple de réalisation d'un satellite 10 pour la mise en oeuvre du procédé 50 d'acquisition.

Tel qu'illustré par la figure 6, le satellite 10 comporte deux générateurs solaires 12, 13 agencés sur des faces respectives opposées d'un corps 11 dudit satellite 10. L'instrument d'observation 20 est agencé sur une face reliant lesdites faces portant les générateurs solaires 12, 13.

Le satellite 10 comporte également des moyens de contrôle d'attitude (non représentés sur les figures) du satellite 10 suivant trois axes, tels que des actionneurs inertiels. Lesdits moyens de contrôle d'attitude présentent notamment une capacité Ct de formation de couple en tangage et une capacité $C_r$ de formation de couple en roulis. En d'autres termes, Ct (resp. $C_r$) correspond à la valeur maximale que peut prendre un couple en tangage (resp. roulis) formé par les moyens de contrôle d'attitude du satellite 10.

En outre, l'inertie en tangage du satellite 10 est désignée It et l'inertie en roulis du satellite 10 est désignée $I_r$.

Le satellite 10 comporte en outre un circuit de traitement (non représenté sur les figures), qui contrôle le fonctionnement de l'instrument d'observation 20, du module d'émission laser 30 et des moyens de contrôle d'attitude. Le circuit de traitement comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes du procédé 50 d'acquisition. Alternativement ou en complément, le circuit de traitement comporte un ou des circuits logiques programmables (FPGA, PLD, etc.), et/ou un ou des circuits intégrés spécialisés (ASIC, etc.), et/ou un ensemble de composants électroniques discrets, etc., adaptés à effectuer tout ou partie desdites étapes du procédé 50 d'acquisition.

En d'autres termes, le circuit de traitement correspond à des moyens configurés de façon logicielle (produit programme d'ordinateur spécifique) et/ou matérielle (FPGA, PLD, ASIC, composants électroniques discrets, etc.) pour effectuer tout ou partie des étapes du procédé 50 d'acquisition, par un contrôle adapté de l'instrument d'observation 20, du module d'émission laser 30 et des moyens de contrôle d'attitude.

Il est à noter que le satellite 10 peut également comporter, de manière conventionnelle, d'autres éléments tels que des capteurs (senseur stellaire, gyromètre, etc.), qui peuvent être également reliés au circuit de traitement et qui sortent du cadre de la présente invention.

Tel qu'indiqué précédemment, pour une orbite circulaire (ou elliptique) donnée et pour une durée d'immobilisation $\alpha$ prédéterminée suffisamment longue pour une prise de vue de qualité suffisante en termes de durée d'acquisition (SNR) et de durée de tranquillisation, les principaux paramètres permettant d'assurer que la quantité $V_{sol} \cdot (\alpha + \beta) \cdot 1/L$ est inférieure à R sont principalement la longueur L de l'empreinte au sol et, pour des parties agencées suivant la direction de défilement, le rapport $C_t/I_t$. En particulier, la quantité $V_{sol} \cdot (\alpha + \beta) \cdot 1/L$ diminue lorsque le rapport $C_t/I_t$ augmente et/ou lorsque la longueur L augmente.

En considérant que le capteur matriciel 24 de l'instrument d'observation 20 comporte $N_p$ cellules d'acquisition (pixels) suivant la direction de défilement, alors le nombre $N_p$ est de préférence supérieur à 1000, voire supérieur à 5000 ou 10000. Si l'on considère une résolution spatiale $R_s$ de l'ordre de 0.5 m, alors cela correspond à une longueur L supérieure à 500 m, voire supérieure à 2.5 km ou 5 km.

Alternativement ou en complément, le rapport $C_t/I_t$ est de préférence supérieur à 0.01 s$^{-2}$, voire supérieur à 0.018 s$^{-2}$. Par exemple, la capacité Ct de formation couple en tangage est supérieure à 0.8 Newton mètre (N·m) et l'inertie en tangage It est inférieure à 80 kg·m$^2$. Dans des modes préférés de réalisation, la capacité Ct de formation couple en tangage est supérieure à 1 N·m et l'inertie en tangage It est inférieure à 60 kg·m$^2$.

En considérant un satellite 10 présentant un rapport $C_t/I_t$ élevé et un instrument d'observation 20 présentant une empreinte au sol de longueur L élevée, il est possible d'avoir des durées d'acquisition $\alpha_a$ d'images suffisamment grandes pour la qualité de prise de vue, tout en compensant le retard pris par des manoeuvres rapides entre acquisitions successives. En particulier, il est possible d'acquérir une zone terrestre Z comportant au moins une bande de longueur supérieure à 10 km, voire supérieure à 100 km, obtenue par l'acquisition d'images d'au moins 3 parties, voire beaucoup plus, agencées dans le prolongement l'une de l'autre dans la direction de défilement du satellite 10. En considérant un satellite 10 présentant un rapport $C_t/I_t$ élevé, il est également possible d'effectuer rapidement la manoeuvre en tangage de l'étape S60 de modification de pointage d'une phase d'émission P51, ce qui permet de démarrer au plus tôt l'émission de données à destination d'un module de réception laser 40. Il est à noter que tout ce qui a été dit précédemment pour la capacité Ct en tangage et le rapport $C_t/I_t$ est également applicable pour la capacité $C_r$ en roulis et le rapport $C_r/I_r$.

Dans des modes préférés de réalisation, les moyens de contrôle d'attitude comportent au moins une roue à réaction récupératrice d'énergie électrique. De préférence, tous les actionneurs inertiels mis en oeuvre lors de l'étape S60 de modification de pointage sont des roues à réaction récupératrices d'énergie électrique. De telles roues à réaction récupératrices d'énergie électrique sont connues de la demande de brevet EP 2247505 A1.

L'utilisation de roues à réaction récupératrices d'énergie électrique est particulièrement avantageuse pour les raisons suivantes. Tout d'abord, il convient de noter que, pour fournir une capacité de couple en tangage (resp. en roulis) élevée (supérieure à 0.8 N·m voire supérieure à 1 N·m) au moyen de roues à réaction, il est nécessaire d'utiliser des roues à réaction assez massives, ce qui tend à augmenter l'inertie en tangage It (resp. $I_r$) du satellite 10. Toutefois, avec des roues à réaction récupératrices d'énergie électrique, en particulier telles que décrites dans la demande de brevet EP 2247505 A1, il est possible de réduire la masse requise, à capacité de couple équivalente, par rapport aux roues à réaction non-récupératrices d'énergie électrique. En outre, du fait que les roues à réaction sont récupératrices d'énergie électrique, les besoins en énergie électrique du satellite 10 sont réduits. Il est notamment possible de réduire les dimensions et la masse des générateurs solaires 12, 13, ce qui permet de réduire l'inertie du satellite 10. Ainsi, l'augmentation en masse éventuellement nécessaire pour avoir une capacité de couple importante (bien que moindre avec des roues à réaction récupératrices d'énergie électrique qu'avec des roues à réaction non-récupératrices d'énergie électrique) peut être compensée au moins en partie par une réduction de la masse et des dimensions des générateurs solaires 12, 13.

Dans des modes particuliers de réalisation, les moyens de contrôle d'attitude comportent au moins un actionneur gyroscopique (« Control Moment Gyroscope » ou CMG dans la littérature anglo-saxonne). De préférence, tous les actionneurs inertiels mis en oeuvre lors de l'étape S60 de modification de pointage sont des actionneurs gyroscopiques. Il est cependant possible de combiner différents types d'actionneurs inertiels, comme par exemple des actionneurs gyroscopiques et des roues à réaction.

L'utilisation d'actionneurs gyroscopiques est particulièrement avantageuse du fait que ceux-ci présentent un rapport (capacité en couple / masse) élevé. Ainsi, il est possible d'avoir une capacité de couple en tangage élevée sans pénaliser l'inertie en tangage It du satellite 10

Tel qu'indiqué précédemment, l'instrument d'observation 20 comporte au moins un capteur matriciel 24, par exemple de type CMOS (acronyme de l'expression anglo-saxonne « Complementary Metal-Oxyde-Semiconductor »). Il est cependant à noter que l'instrument d'observation 20 peut comporter plusieurs capteurs matriciels 24. Par exemple, plusieurs capteurs matriciels peuvent être mis en oeuvre pour acquérir des images dans des longueurs d'ondes respectives différentes (rouge, vert, bleu, proche infrarouge, etc.), etc.

Dans des modes préférés de réalisation, l'instrument d'observation 20 comporte un filtre de Bayer. Un filtre de Bayer, de manière connue en soi, permet d'acquérir des images en couleur dans des longueurs d'ondes respectives différentes rouge, vert et bleu (« Red, Green, Blue » ou RGB dans la littérature anglo-saxonne) avec un même capteur matriciel 24. De telles dispositions permettent de simplifier l'instrument d'observation 20.

Outre un ou plusieurs capteurs matriciels 24, l'instrument d'observation 20 peut comporter d'autres éléments, comme par exemple une optique comportant un ou plusieurs miroirs, une ou plusieurs lentilles, une structure de support, des composants électroniques, etc.

Dans des modes préférés de réalisation, l'optique de l'instrument d'observation 20 comporte au moins deux miroirs fixes en repère engin spatial, et le module d'émission laser 30 émet un rayonnement laser suivant la ligne de visée laser 31 via au moins deux miroirs de l'optique de l'instrument d'observation 20. Ainsi, alors que les miroirs sont mis en oeuvre pour réfléchir successivement un flux optique reçu de la surface de la Terre 80 en direction du capteur matriciel 24, tout ou partie de ces miroirs sont également utilisés pour réfléchir dans le sens inverse le rayonnement laser émis par le module d'émission laser 30. Le capteur matriciel 24 et le module d'émission laser 30 sont donc structurellement liés l'un à l'autre, et sont donc soumis aux mêmes erreurs de pointage. Ils peuvent être vus comme correspondant à un seul et même équipement pour les opérations de contrôle de pointage.

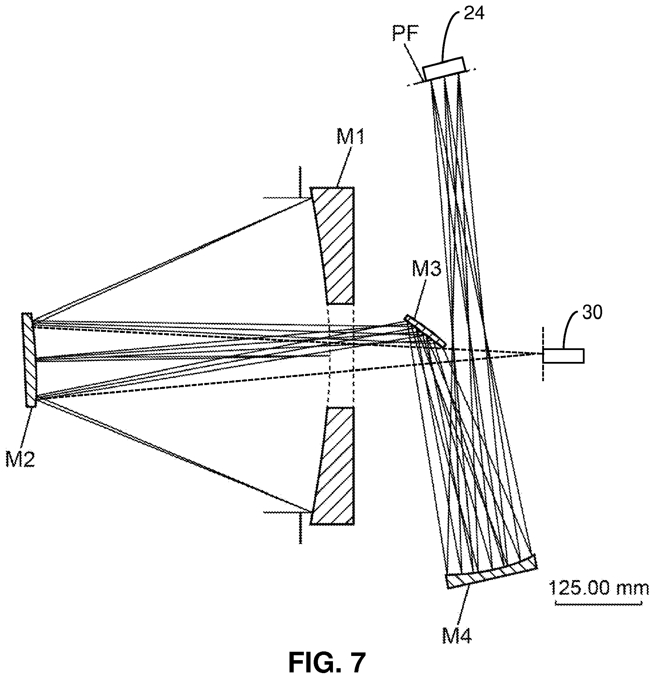

Les figures 7 à 9 représentent des exemples non limitatifs de réalisation dans lesquels des miroirs de l'optique de l'instrument d'observation 20 sont utilisés par le module d'émission laser 30. Il est à noter que les figures 7 à 9 sont représentées à l'échelle, mais uniquement pour les différents miroirs et leurs positions respectives.

Dans les figures 7 à 9, l'optique de l'instrument d'observation 20 est de type Korsch, ce qui permet d'avoir à la fois une grande compacité et une faible masse, avec une focale élevée. Tel qu'illustré par les figures 7 à 9, l'optique de Korsch comporte un miroir M1 de 480 mm, un miroir M2 de 160 mm, un miroir de repli M3 et un miroir M4. Le flux optique incident est donc successivement réfléchi par le miroir M1, le miroir M2 (à travers le miroir M1), le miroir de repli M3 et le miroir M4, jusqu'à atteindre le plan focal PF au niveau duquel se trouve le capteur matriciel 24 de l'instrument d'observation 20.

Avec une telle optique de Korsch, il peut être conçu un instrument d'observation d'environ 80 kg, embarqué dans un satellite d'environ 300 kg. Le plan focal peut comporter par exemple un ou plusieurs capteurs matriciels, chaque capteur matriciel comportant 14192 x 10140 cellules d'acquisition (pixels), par exemple selon le modèle IMX 411 commercialisé par Sony®. Pour un satellite en orbite à 500 km d'altitude, cela permet d'atteindre une résolution de 0.5 m, avec une longueur L de 5 km. Par exemple, le corps 11 du satellite a une dimension 1.53 x 1.14 x 1.0 m. Deux générateurs solaires 12, 13 de 1 m$^2$ assurent une puissance de 250 W suffisante pour les besoins du satellite. Grâce à cette compacité, les inerties $I_{xx}$, $I_{yy}$, $I_{zz}$ selon les trois axes X, Y, Z du repère satellite sont faibles : ($I_{xx}$, $I_{yy}$, $I_{zz}$) = (57, 76, 77) kg·m$^2$. Sur orbite, l'attitude est du satellite 10 est par exemple contrôlée autour d'une attitude de référence dans laquelle l'axe X est colinéaire avec l'axe de roulis et l'axe Y est colinéaire avec l'axe de tangage, auquel cas les inerties $I_{xx}$ et $I_{yy}$ correspondent respectivement à l'inertie en roulis $I_r$ et à l'inertie en tangage It.

Dans l'exemple illustré par la figure 7, le module d'émission laser 30 est situé en vis-à-vis du miroir M2, au niveau d'un plan focal intermédiaire associé aux miroirs M1 et M2. Le rayonnement laser émis par le module d'émission laser 30 est donc successivement réfléchi par le miroir M2 puis par le miroir M1 à partir duquel il est réfléchi suivant la ligne de visée laser 31.

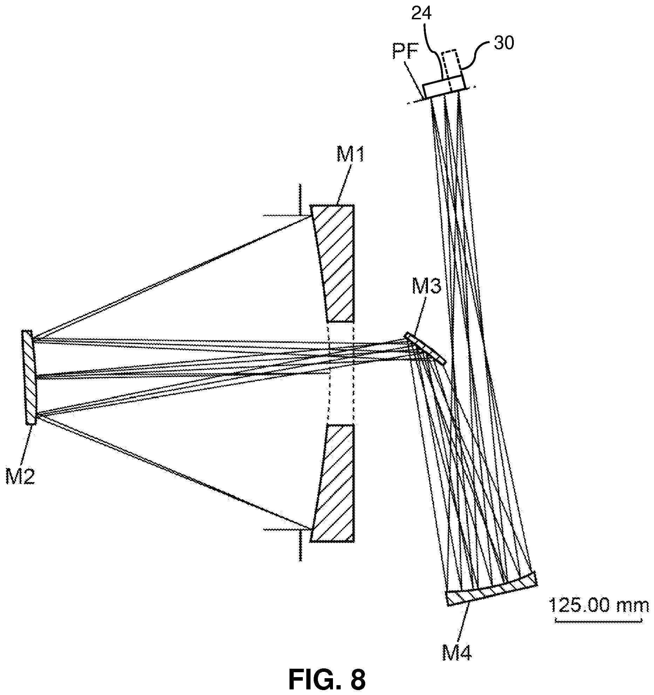

Dans l'exemple illustré par la figure 8, le module d'émission laser 30 est situé au niveau du plan focal PF de l'instrument d'observation 20, à un endroit du plan focal PF qui est décalé par rapport au capteur matriciel 24. Le rayonnement laser émis par le module d'émission laser 30 est donc successivement réfléchi par les miroirs M4, M3, M2 et M1 à partir duquel il est réfléchi suivant la ligne de visée laser 31. Dans cet exemple, les lignes de visée optique 21 et 31 sont nécessairement différentes l'une de l'autre.

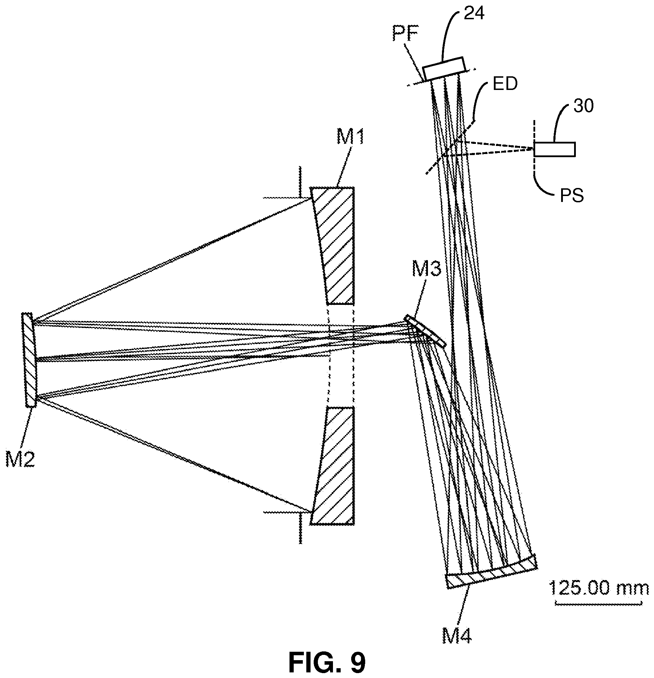

Dans l'exemple illustré par la figure 9, le module d'émission laser 30 est situé au niveau d'un plan focal secondaire PS, qui correspond à une duplication du plan focal PF de l'instrument d'observation 20. A cet effet, un élément de duplication ED de plan focal est agencé sur le trajet des rayonnements entre le plan focal PF et le miroir M4. L'élément de duplication ED peut comprendre un miroir ou une lame dichroïque configuré pour réfléchir l'un parmi le rayonnement laser du module d'émission laser 30 et le flux optique issu de la scène observée et pour transmettre sans réflexion l'autre parmi le rayonnement laser et le flux optique. Dans l'exemple illustré par la figure 8, c'est le rayonnement laser qui est réfléchi, de sorte que le rayonnement laser est successivement réfléchi par l'élément de duplication ED puis les miroirs M4, M3, M2 et M1. Dans cet exemple, les lignes de visée optique 21 et 31 peuvent être confondues.

Il est à noter que d'autres configurations sont possibles pour l'optique de l'instrument d'observation 20, qui peut notamment comporter un nombre de miroirs différent du nombre de miroirs (4) représentés sur les figures 7 à 9. Par exemple, l'optique de l'instrument d'observation peut comporter deux miroirs, par exemple agencés comme les miroirs M1 et M2 de la figure 7, le module d'émission laser 30 et le capteur matriciel 24 étant par exemple tous deux situés au niveau du plan focal de l'instrument d'observation 20 (qui correspond dans ce cas au plan focal intermédiaire de la figure 7).

**Revendications**

1. Procédé (50) d'acquisition d'images par un engin spatial (10), ledit engin spatial étant en orbite défilante autour de la Terre, l'engin spatial comportant :

   - un instrument d'observation (20) associé à un champ de vision (22, 23) fixe en repère engin spatial, ledit champ de vision étant défini, autour d'une ligne de visée optique (21), par un capteur matriciel (24) situé à un plan focal (PF) d'une optique de l'instrument d'observation,
   - un module d'émission laser (30) associé à une ligne de visée laser (31) fixe en repère engin spatial, ledit module d'émission laser étant situé au plan focal ou à un plan focal secondaire (PS) de l'optique ou à un plan focal intermédiaire d'une partie de l'optique, le module d'émission laser étant adapté à émettre des données comportant des images acquises par le capteur matriciel de l'instrument d'observation, à destination d'un module de réception laser, ledit procédé comportant au moins deux phases d'acquisition (P50-1, P50-2) successives d'images de deux parties P1 et P2 d'une zone terrestre Z par le capteur matriciel de l'instrument d'observation et une phase d'émission (P51) de données par le module d'émission laser, lesdites données émises comportant une ou plusieurs images acquises par le capteur matriciel de l'instrument d'observation,

dans lequel, au cours de chaque phase d'acquisition et de chaque phase d'émission, l'attitude de l'engin spatial est contrôlée en fonction d'un point de consigne à la surface de la Terre prédéterminé pour la phase d'acquisition ou d'émission en cours, ledit contrôle d'attitude comportant :

- une étape (S60) de modification de pointage au cours de laquelle l'attitude de l'engin spatial est modifiée de sorte à orienter la ligne de visée optique ou la ligne de visée laser vers le point de consigne,
- une étape (S61) d'immobilisation de pointage pendant un intervalle temporel de durée dite d'immobilisation, au cours de laquelle l'attitude de l'engin spatial est contrôlée de sorte que la ligne de visée optique ou la ligne de visée laser est maintenue orientée vers ledit point de consigne pendant la durée d'immobilisation.

dans lequel l'engin spatial ayant une vitesse de défilement au sol $V_{sol}$ et l'instrument d'observation étant associé à une résolution spatiale $R_s$ suivant une direction de défilement, la durée d'immobilisation est supérieure à $R_s/V_{sol}$ pour chaque phase d'acquisition,

dans lequel une empreinte au sol du champ de vision étant de longueur L suivant la direction de défilement, dans lequel l'étape de modification de pointage de la phase d'acquisition de l'image de la partie $P_2$ est exécutée au cours d'un intervalle temporel de durée $\beta$ telle que la quantité $V_{sol} \cdot (\alpha + \beta) \cdot 1/L$ est inférieure à une valeur R, R étant égal à 3, $\alpha$ étant la durée d'immobilisation de la phase d'acquisition de la partie $P_1$.

2. Procédé (50) selon la revendication 1, dans lequel la durée d'immobilisation $\alpha$ est comprise entre 200 ms et 1s.

3. Procédé (50) selon l'une quelconque des revendications précédentes, dans lequel la durée $\beta$ est comprise entre 1s et 2s.

4. Procédé (50) selon l'une quelconque des revendications précédentes, comportant, au cours d'une même période orbitale, au moins deux phases d'acquisition d'images d'une même partie $P_1$ d'une zone terrestre.

5. Procédé (50) selon l'une quelconque des revendications précédentes, dans lequel chaque étape d'immobilisation de pointage comporte une tranquillisation du pointage de l'engin spatial (10) préalable à l'acquisition d'une image ou à l'émission d'une ou plusieurs images acquises.

6. Procédé (50) selon l'une quelconque des revendications précédentes, comportant une phase d'acquisition par le capteur matriciel d'une image d'une zone de calibration, dite image de calibration, et une calibration d'erreur de pointage par comparaison de l'image de calibration avec des données de référence associées à ladite zone de calibration.

7. Engin spatial (10) destiné à être placé en orbite défilante autour de la Terre (80), comportant :

- des moyens de contrôle d'attitude de l'engin spatial,
- un instrument d'observation (20) associé à un champ de vision (22, 23) fixe en repère engin spatial, ledit champ de vision étant défini, autour d'une ligne de visée optique (21), par un capteur matriciel (24) situé à un plan focal (PF) d'une optique de l'instrument d'observation,
- un module d'émission laser (30) associé à une ligne de visée laser (31) fixe en repère engin spatial, ledit module d'émission laser étant situé au plan focal ou à un plan focal secondaire (PS) de l'optique ou à un plan focal intermédiaire d'une partie de l'optique,
- des moyens configurés pour mettre en oeuvre un procédé d'acquisition d'images selon l'une quelconque des revendications précédentes.

8. Engin spatial (10) selon la revendication 7, dans lequel, ledit engin spatial (10) étant d'inertie en tangage $I_t$ et les moyens de contrôle d'attitude ayant une capacité $C_t$ de formation de couple en tangage, le rapport $C_t / I_t$ est supérieur à 0.01 s$^{-2}$.

9. Engin spatial (10) selon la revendication 7 ou 8, dans lequel, ledit engin spatial (10) étant d'inertie en roulis $I_r$ et les moyens de contrôle d'attitude ayant une capacité $C_r$ de formation de couple en roulis, le rapport $C_r / I_r$ est supérieur à 0.01 s$^{-2}$.

10. Engin spatial (10) selon l'une quelconque des revendications 7 à 9, dans lequel le capteur matriciel comporte un nombre $N_p$ supérieur à 1000 de cellules d'acquisition suivant une direction de défilement de l'engin spatial.

11. Engin spatial (10) selon l'une quelconque des revendications 7 à 10, dans lequel les moyens de contrôle d'attitude comportent au moins une roue à réaction récupératrice d'énergie électrique et/ou au moins un actionneur gyroscopique.

12. Engin spatial (10) selon l'une quelconque des revendications 7 à 11, dans lequel l'optique comporte au moins deux miroirs (M1, M2, M3, M4) fixes en repère engin spatial, et le module d'émission laser émet un rayonnement laser suivant la ligne de visée laser via au moins deux miroirs de l'optique.

13. Engin spatial (10) selon la revendication 12, dans lequel l'instrument d'observation comporte une optique de Korsch.

**Patentansprüche**

1. Verfahren (50) zur Erfassung von Bildern unter Verwendung eines Raumfahrzeugs (10), wobei das Raumfahrzeug in einer nichtstationären Umlaufbahn um die Erde ist, wobei das Raumfahrzeug aufweist:

   - ein Beobachtungsinstrument (20) mit einem zugehörigen Gesichtsfeld (22, 23), das bezüglich des Raumfahrzeugs ortsfest ist, wobei das Gesichtsfeld um eine optische Visierlinie (21) herum durch einen Matrix-Sensor (24) definiert ist, der in einer Fokalebene (PF) einer Optik des Beobachtungsinstruments angeordnet ist,
   - ein Laserübertragungsmodul (30) mit einer zugehörigen Laservisierlinie (31), die bezüglich des Raumfahrzeugs ortsfest ist, wobei das Laserübertragungsmodul in der Fokalebene oder einer sekundären Fokalebene (PS) der Optik oder in einer Zwischenfokalebene eines Teils der Optik angeordnet ist, das Laserübertragungsmodul angepasst ist, um Daten, die von dem Matrix-Sensor des Beobachtungsinstruments erfasste Bilder aufweisen, zu einem Laserempfangsmodul zu übertragen,

   wobei das Verfahren mindestens zwei aufeinanderfolgende Erfassungsphasen (P50-1, P50-2) zum Erfassen von Bildern zweier Teile P1 und P2 einer terrestrischen Zone Z mittels des Matrix-Sensors des Beobachtungsinstruments und eine Übertragungsphase (P51) zum Übertragen von Daten mittels des Laserübertragungsmoduls aufweist, wobei die übertragenen Daten ein oder mehrere von dem Matrix-Sensor des Beobachtungsinstruments erfasste Bilder aufweisen,
   in welchem Verfahren während jeder Erfassungsphase und jeder Übertragungsphase die Lage des Raumfahrzeugs als Funktion eines für die aktuelle Erfassungs- oder Übertragungsphase vorgegebenen Sollpunkts auf der Erdoberfläche gesteuert wird, wobei die Lagesteuerung aufweist:

   - einen Ausrichtungsmodifikationsschritt (60), im Verlaufe dessen die Lage des Raumfahrzeugs modifiziert wird, um die optische Visierlinie oder die Laservisierlinie hin zu dem Sollpunkt zu orientieren,
   - einen Ausrichtungsblockierungsschritt (S61) während eines Blockierungsdauer genannten Zeitintervalls, im Verlaufe dessen die Lage des Raumfahrzeugs derart gesteuert wird, dass die optische Visierlinie oder die Laservisierlinie während der Blockierungsdauer hin zu dem Sollpunkt orientiert bleibt,

   in welchem, wobei das Raumfahrzeug eine Bodenüberfluggeschwindigkeit $V_{sol}$ hat und das Beobachtungsinstrument eine zugehörige räumlichen Auflösung $R_s$ in einer Überflugrichtung hat, die Blockierungsdauer für jede Erfassungsphase größer als $R_s/V_{sol}$ ist,
   in welchem eine Bodenspur des Gesichtsfelds eine Länge L in Überflugrichtung hat,
   in welchem der Ausrichtungsmodifikationsschritt der Erfassungsphase des Bilds des Teils $P_2$ während eines Zeitintervalls einer solchen Dauer $\beta$ ausgeführt wird, dass die Größe $V_{sol}*(\alpha+\beta)*1/L$ kleiner als ein Wert R ist, wobei R gleich 3 und $\alpha$ die Blockierungsdauer der Erfassungsphase des Teils $P_1$ ist.

2. Verfahren (50) nach Anspruch 1, in welchem die Blockierungsdauer $\alpha$ zwischen 200ms und 1s ist.

3. Verfahren (50) nach einem der vorstehenden Ansprüche, in welchem die Dauer $\beta$ zwischen 1s und 2s ist.

4. Verfahren (50) nach einem der vorstehenden Ansprüche, aufweisend im Verlaufe einer gleichen Umlaufperiode mindestens zwei Erfassungsphasen von Bildern eines gleichen Teils $P_1$ einer terrestrischen Zone.

5. Verfahren (50) nach einem der vorstehenden Ansprüche, in welchem jeder Ausrichtungsblockierungsschritt eine Beruhigung der Ausrichtung des Raumfahrzeugs (10) vor der Erfassung eines Bilds oder der Übertragung eines oder mehrerer erfasster Bilder aufweist.

6. Verfahren (50) nach einem der vorstehenden Ansprüche, aufweisend eine Erfassungsphase eines Bilds einer Kalibrationszone, Kalibrationsbild genannt, mittels des Matrix-Sensors und eine Ausrichtungsfehlerkalibration durch Vergleichen des Kalibrationsbilds mit der Kalibrationszone zugehörigen Referenzdaten.

**7.** Raumfahrzeug (10), das vorgesehen ist, in eine nichtstationäre Umlaufbahn um die Erde (80) gebracht zu werden, aufweisend:

> - Einrichtungen zur Lagesteuerung des Raumfahrzeugs,
> - ein Beobachtungsinstrument (20) mit einem zugehörigen Gesichtsfeld (22, 23), das bezüglich des Raumfahrzeugs ortsfest ist, wobei das Gesichtsfeld um eine optische Visierlinie (21) herum durch einen Matrix-Sensor (24) definiert ist, der in einer Fokalebene (PF) einer Optik des Beobachtungsinstruments angeordnet ist,
> - ein Laserübertragungsmodul (30) mit einer zugehörigen Laservisierlinie (31), die bezüglich des Raumfahrzeugs ortsfest ist, wobei das Laserübertragungsmodul in der Fokalebene oder einer sekundären Fokalebene (PS) der Optik oder in einer Zwischenfokalebene eines Teils der Optik angeordnet ist,
> - Einrichtungen, die konfiguriert sind, um ein Verfahren zur Erfassung von Bildern nach einem der vorstehenden Ansprüche durchzuführen.

**8.** Raumfahrzeug (10) nach Anspruch 7, in welchem, wobei das Raumfahrzeug (10) eine Nickträgheit $I_t$ hat und die Lagesteuerungseinrichtungen eine Nickpaarbildungskapazität $C_t$ haben, das Verhältnis $C_t/I_t$ größer als $0,01s^{-2}$ ist.

**9.** Raumfahrzeug (10) nach Anspruch 7 oder 8, in welchem, wobei das Raumfahrzeug (10) eine Rollträgheit $I_r$ hat und die Lagesteuerungseinrichtungen eine Rollpaarbildungskapazität $C_r$ haben, das Verhältnis $C_r/I_r$ größer als $0,01s^{-2}$ ist.

**10.** Raumfahrzeug (10) nach einem der Ansprüche 7 bis 9, in welchem der Matrix-Sensor eine Anzahl $N_p$ von mehr als 1000 Erfassungszellen in einer Flugrichtung des Raumfahrzeugs aufweist.

**11.** Raumfahrzeug (10) nach einem der Ansprüche 7 bis 10, in welchem die Lagesteuerungseinrichtungen mindestens ein Reaktionsrad für elektrische Energierückgewinnung und/oder mindestens einen Gyroskop-Aktuator aufweisen.

**12.** Raumfahrzeug (10) nach einem der Ansprüche 7 bis 11, in welchem die Optik mindestens zwei bezüglich des Raumfahrzeugs ortsfeste Spiegel (M1, M2, M3, M4) aufweist, und das Laserübertragungsmodul eine Laserstrahlung entlang der Laservisierlinie via mindestens zwei Spiegel der Optik überträgt.

**13.** Raumfahrzeug (10) nach Anspruch 12, in welchem das Beobachtungsinstrument eine Korsch-Optik aufweist.

**Claims**

**1.** Method (50) for acquiring images by using a spacecraft (10), said spacecraft being in a moving orbit around the Earth, the spacecraft comprising:

> - an observation instrument (20) associated with a field of view (22, 23) that is fixed in the spacecraft frame of reference, said field of view being defined, around an optical line of sight (21), by a sensor array (24) located in a focal plane (PF) of the optics of the observation instrument,
> - a laser transmission module (30) associated with a laser line of sight (31) that is fixed in the spacecraft frame of reference, said laser transmission module being located in the focal plane or in a secondary focal plane (PS) of the optics or in an intermediate focal plane of part of the optics, the laser transmission module being adapted to transmit data comprising images acquired by the sensor array of the observation instrument, to a laser reception module,
> said method comprising at least two successive phases (P50-1, P50-2) of acquiring images of two parts $P_1$ and $P_2$ of a terrestrial area Z by the sensor array of the observation instrument, and a phase (P51) of data transmission by the laser transmission module, said transmitted data comprising one or more images acquired by the sensor array of the observation instrument, wherein, during each acquisition phase and each transmission phase, the attitude of the spacecraft is controlled according to a setpoint on the Earth's surface that was predetermined for the acquisition or transmission phase in progress, said attitude control comprising:

>> - a pointing modification step (S60) during which the attitude of the spacecraft is modified so as to orient the optical line of sight or the laser line of sight towards the setpoint,
>> - a pointing immobilization step (S61) during a time interval referred to as the immobilization period, during which the attitude of the spacecraft is controlled so that the optical line of sight or the laser line of sight is kept oriented towards said setpoint during the immobilization period,

> wherein, the spacecraft having a ground speed $V_{sol}$ and the observation instrument being associated with a spatial resolution $R_s$ along a direction of travel, the immobilization period is greater

than $R_s/V_{sol}$ for each acquisition phase, wherein, a ground footprint of the field of view being of length L along the direction of travel, wherein the pointing modification step of the image acquisition phase for part $P_2$ is executed during a time interval of duration $\beta$ such that the value $V_{sol} \cdot (\alpha + P) . 1/L$ is less than a value R, R being equal to 3, $\alpha$ being the immobilization period of the acquisition phase for part $P_1$.

2. Method (50) according to claim 1, wherein the immobilization period $\alpha$ is between 200 ms and 1s.

3. Method (50) according to any one of the preceding claims, wherein the duration $\beta$ is between 1s and 2s.

4. Method (50) according to any one of the preceding claims, comprising, during a same orbital period, at least two image acquisition phases for a same part $P_1$ of a terrestrial area.

5. Method (50) according to any one of the preceding claims, wherein each pointing immobilization step comprises stabilizing the pointing of the spacecraft (10) prior to acquiring an image or transmitting one or more acquired images.

6. Method (50) according to any one of the preceding claims, comprising a phase of using the sensor array to acquire an image of a calibration area, referred to as a calibration image, and calibrating the pointing error by comparing the calibration image with reference data associated with said calibration area.

7. Spacecraft (10) intended to be placed in moving orbit around the Earth (80), comprising:

   - attitude control means for the spacecraft,
   - an observation instrument (20) associated with a field of view (22, 23) that is fixed in the spacecraft frame of reference, said field of view being defined, around an optical line of sight (21), by a sensor array (24) located in a focal plane (PF) of optics of the observation instrument,
   - a laser transmission module (30) associated with a laser line of sight (31) that is fixed in the spacecraft frame of reference, said laser transmission module being located in the focal plane or in a secondary focal plane (PS) of the optics or in an intermediate focal plane of part of the optics,
   - means configured to implement a method for acquiring images according to any one of the preceding claims.

8. Spacecraft (10) according to claim 7, wherein, said spacecraft (10) having a pitch inertia $I_t$ and the attitude control means having a pitch torque formation capacity Ct, the ratio $C_t/I_t$ is greater than 0.01 s$^{-2}$.

9. Spacecraft (10) according to claim 7 or 8, wherein, said spacecraft (10) having a roll inertia $I_r$ and the attitude control means having a roll torque formation capacity $C_r$, the ratio $C_r/I_r$ is greater than 0.01 s$^{-2}$.

10. Spacecraft (10) according to any one of claims 7 to 9, wherein the sensor array comprises a number $N_p$ that is greater than 1000, of acquisition cells along a direction of travel of the spacecraft.

11. Spacecraft (10) according to any one of claims 7 to 10, wherein the attitude control means comprise at least one reaction wheel which recovers electrical energy and/or at least one control moment gyroscope.

12. Spacecraft (10) according to any one of claims 7 to 11, wherein the optics comprise at least two mirrors (M1, M2, M3, M4) that are fixed in the spacecraft frame of reference, and the laser transmission module transmits laser radiation along the laser line of sight via at least two mirrors of the optics.

13. Spacecraft (10) according to claim 12, wherein the observation instrument comprises Korsch optics.

FIG. 1

FIG. 2

**FIG. 3**

**FIG. 4**

**FIG. 5**

**FIG. 6**

**FIG. 7**

**FIG. 8**

**FIG. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018073507 A

- EP 2247505 A1